# EUROPÄISCHE PATENTANMELDUNG

(11) **EP 4 235 866 A1**
(43) Veröffentlichungstag der Anmeldung: **30.08.2023**
(21) Anmeldenummer: 22158285.1
(22) Anmeldetag: 23.02.2022
(51) Int. Cl.: H01M 4/38, H01M 6/52, H01M 12/06, H01M 50/664, H01M 50/691, H01M 4/66, H01M 4/90, H01M 6/50, H01M 50/138, H01M 50/209, H01M 4/86, H01M 12/02, H01M 12/04, H01M 16/00, H01M 50/673, H01M 50/77, H01M 50/51, H01M 50/512, H01M 50/522, H01M 50/249

(54) **MEHRZELLIGE BATTERIE UND BATTERIESYSTEM VON METALL-LUFT-PRIMÄRZELLEN MIT ANODENSTAPEL**

(71) Anmelder: Evonik Operations GmbH, 45128 Essen (DE); Forschungszentrum Jülich GmbH, 52425 Jülich (DE)
(72) Erfinder: Die Erfindernennung liegt noch nicht vor
(74) Vertreter: Evonik Patent Association

(57) **Zusammenfassung**

Gegenstand der Erfindung ist eine mehrzellige Batterie und ein Batteriesystem von Metall-Luft-Primärzellen als auch ein Verfahren für den Betrieb, das vorzugsweise durch ein System zur Datenverarbeitung gesteuert wird. Die jeweilige Primärzelle umfasst Anode (A), Luft-Kathode (B) sowie mindestens einem Separator (S), der Anode (A) und Luft-Kathode (B) trennt, wobei eine Anode (A) in Form eines Anodenstapels von Anodenplatten vorliegt. Der Elektrolyt der Primärzelle ist während des Betriebes der Primärzelle austauschbar.

## Beschreibung

Gegenstand der Erfindung ist eine mehrzellige Batterie und ein Batteriesystem von Metall-Luft-Primärzellen als auch ein Verfahren für den Betrieb, das vorzugsweise durch ein System zur Datenverarbeitung gesteuert wird. Die jeweilige Primärzelle umfasst Anode (A), Luft-Kathode (B) sowie mindestens einem Separator (S), der Anode (A) und Luft-Kathode (B) trennt, wobei eine Anode (A) in Form eines Anodenstapels von Anodenplatten vorliegt. Der Elektrolyt der Primärzelle ist während des Betriebes der Primärzelle austauschbar.

Aufgrund des zunehmenden Bedarfes an E-Mobility im Personennahverkehr durch Elektroautos, Elektrofahrräder sowie elektrisch betriebene Busse etc. als auch bei zunehmender dezentraler Stromgewinnung besteht ein enormer Bedarf an umweltverträglichen Batterien, deren Komponenten einerseits unbeschränkt verfügbar und andererseits unbeschränkt recyclebar, umweltverträglich und/oder weiter verwendbar sein sollen. Silizium ist ein auf der Erde unbegrenzt verfügbarer Rohstoff. Darüber hinaus müssen die Komponenten einer Batterie kostengünstig verfügbar sein. Aktuell zeigt sich ein Trend zu Plug-in-Hybrid Fahrzeugen, aufgrund des erhöhten Gewichtes und der Erkenntnis, dass diese Fahrzeuge nicht zum realen Fahrprofil der Nutzer passen, da der Anteil an Kurzstrecken den der Langstrecken deutlich überwiegt, reduziert sich der ökologische Nutzen der Fahrzeuge. Für diese Nutzer können Elektroautos mit einer ersten Batterie und einer zweiten Batterie als ein sogenannter "Range Extender", hier einer zweiten, vorzugsweise austauschbaren Batterie eine sinnvollere Lösung bieten.

Ein Problem bei aktuellen Lithium-Batterien ist die hohe Spannung von bis zu 300 Volt, die die Batterien liefern. Dies ist im Falle eines Unfalls jedoch nicht akzeptabel. Somit besteht ein Bedarf an Batterien mit einer Schutzkleinspannung von 48 Volt (VDI/VDE), um die Gefahr einer Verletzung von beteiligten Personen zu minimieren.

Des Weiteren ist es bekannt, durch ständige Zufuhr eines Brennstoffes in Brennstoffzellen, die eine galvanische Zelle aufweisen, in Gegenwart eines Oxidationsmittels elektrische Energie zu erzeugen. Grundsätzlich ist dieses Prinzip auch für Silizium-Luft-Batterien denkbar. Zudem sind übliche Silizium enthaltende Lithium-Ionen-Sekundärbatterien täglich weltweit im Einsatz.

Aufgabe der Erfindung war es, eine mehrzellige Batterie umfassend elektrochemische Primärzellen, insbesondere mit einem Zellaufbau der elektrochemischen Primärzellen, bereitzustellen, so dass die Primärzellen auf wirtschaftliche Weise über einen verlängerten Zeitraum betrieben werden können. Elektrochemische Primärzellen verbrauchen sich bei der Entladung und können somit nicht wieder aufgeladen werden, wie dies für Akkumulatoren mit Sekundärzellen bekannt ist. Daher soll in der mehrzelligen Batterie in den Primärzellen auf einfache Weise ein Aus- und Neueinbau einer neuen Anode möglich sein, wenn eine zuvor eingebaute Anode verbraucht wurde. Aufgabe der Erfindung war es zudem eine Primärzelle bereitzustellen, die ökologisch und ökonomisch sinnvoll wiederverwendet werden kann. Des Weiteren sollen Komponenten der Batterie, die verbraucht sind, austauschbar sein. Daher sollen insbesondere die Primärzellen, Anoden und auch Kathoden austauschbar sein. Des Weiteren soll die mehrzellige Batterie über einen längeren Zeitraum betrieben werden können. Daher ist es notwendig, auch die chemisch-physikalischen Bedingungen der jeweiligen Primärzelle von außen steuern zu können. Eine Aufgabe bestand darin, von außen mittels einer Steuerung Einfluss auf die chemische Zusammensetzung des Elektrolyten in der jeweiligen Primärzelle als auch auf die Temperatur nehmen zu können. Zudem soll es möglich sein, den fluiden Inhalt, i.d.R. Elektrolyt im Hohlraum eines Anodengehäuses jeder Primärzelle austauschen zu können. Durch die vorgenannten Aufgaben wird angestrebt, Anoden in ein recyclingfähiges Material umwandeln zu können. Zudem soll der Elektrolyt vorzugsweise im verbrauchten Zustand selbst einem Recycling, ggf. mit einer Aufbereitung, zugängig sein.

Gelöst wurden die Aufgaben unter anderem mit einer mehrzelligen Batterie, in der jeder elektrochemischen Primärzelle ein Reservoir mit Elektrolyt zugeordnet ist, in das und aus dem der Elektrolyt bedarfsgesteuert in den Hohlraum einer Primärzelle für den Betrieb der Primärzelle im einen Entladezustand überführt werden kann. Des Weiteren sind den Reservoiren und/oder den Hohlräumen die den Elektrolyten aufnehmen, jeweils mindestens ein Wärmetauscher und/oder mindestens ein Heizmittel zugeordnet, wobei das Heizmittel umfasst eine elektrische WiderstandsHeizung, induktives Heizmittel, eine elektrische Infrarot-Heizung und/oder eine Mikrowellen-Heizung. Optional sind dem Wärmetauscher und/oder dem mindestens einen Heizmittel eine elektronische Steuereinheit zur Steuerung des mindestens einen Wärmetauscher und/oder des mindestens einen Heizmittels und ein oder mehrere Temperatursensoren zugeordnet. Ferner wurden die Aufgaben gelöst durch ein Batteriesystem umfassend die mehrzellige Batterie, das ein Messelement zur Ermittlung von Zustandsdaten des Batteriesystems oder von Zustandsdaten eines Schaltkreises in den das Batteriesystem als Bestandteil aufgenommen ist, und diese Zustandsdaten an ein Steuerelement übermittelt, das diese Zustandsdaten in mindestens zwei Klassen umfassend einen Normalbetrieb und einen "Erweiterten-Betrieb" klassifiziert und anschließend die mehrzellige Batterie oder das Batteriesystem im "Erweiterten-Betrieb" umschaltet schaltet, um elektrische Energie in den Schaltkreis einzuspeisen.

Gleichfalls wird die Aufgabe gelöst durch eine mehrzellige Batterie oder ein Batteriesystem in dem mittels eines Umrichters eine Schutzkleinspannung von 40 bis 60 Volt, insbesondere von ca. 48 Volt mit plus/minus 6 Volt einstellbar ist.

Gegenstand der Erfindung ist eine mehrzellige Batterie einer elektrochemischen Metall-Luft-Primärzelle, umfassend mindestens eine Anode, mindestens eine Luft-Kathode sowie mindestens einen Separator, insbesondere je Kathode, wobei der Separator Anode von Kathode separiert, und wobei eine Anode in Form eines Anodenstapels von Anodenplatten vorliegt.

Ebenso Gegenstand der Erfindung ist eine mehrzellige Batterie umfassend mindestens zwei elektrochemische Primärzellen, die jeweils umfassen mindestens eine Anode, die in Form eines Anodenstapels von Anodenplatten vorliegt, mindestens eine Luft-Kathode (B) und mindestens einen Separator (S), wobei der Separator (S) Anode (A) von Luft-Kathode (B) separiert.

Die Anodenplatten weisen bevorzugt als Anodenmaterial Silizium auf, insbesondere sind die Anodenplatten Silizium-Anodenplatten, wobei die Anodenplatten einen Gehalt an Silizium größer gleich 90 Gew.-% in Bezug auf die Gesamtzusammensetzung der Anodenplatten von 100 Gew.-% aufweisen. In die Gesamtzusammensetzung werden keine elektrisch leitenden Materialien mit einer elektrischen Leitfähigkeit von größer gleich 10 S/m (271 K) eingerechnet. In die Gesamtzusammensetzung der Anodenplatten wird ein in der Anodenplatte integrierter Stromsammler nicht eingerechnet. Als ein Stromsammler gilt ein elektrischer Leiter aus einem elektrisch leitenden Material, insbesondere umfassend Eisen, Eisenlegierung, Kupfer, Kupferlegierung, Aluminium, Aluminiumlegierung oder ein anderweitiges elektrisch leitendes Material umfasssend metallische Legierungen mit einer elektrischen Leitfähigkeit von größer gleich 10 S/m (271 K), optional mit einem Gehalt an Kohlenstoff, oder Mischungen enthaltend diese. Als elektrischer Leiter gilt ein Material mit einer elektrischen Leitfähigkeit (σ) von größer gleich 10 S/m (271 K). Ein Stromsammler kann in verschiednen Leiterklassen vorliegen, Übliche Leiterklassen umfassen Leiterklassen 1 bis 6. Alternativ kann ein Stromsammler als Netz, Gewebe oder Vlies vorliegen.

Weiter ist es bevorzugt, wenn die Anodenplatten als Anodenmaterial Silizium mit einem Gehalt an Bor von 10 Gew.-ppm bis 1,8 Gew.-% in Bezug auf die Gesamtzusammensetzung des Siliziums von 100 Gew.-% aufweisen. Gleichfalls ist es bevorzugt, wenn das Anodenmaterial Silizium-Partikel mit einem Gehalt an Bor von 10 Gew.-ppm bis 1,8 Gew.-% in Bezug auf die Gesamtzusammensetzung der Silizium-Partikel von 100 Gew.-% aufweisen. Besonders bevorzugt sind Anodenplatten und/oder Anodenmaterial in Form von aneinander gesinterten Silizium-Partikeln, vorzugweise mit vorgenannten Gehalten.

Jede Primärzelle der mehrzelligen Batterie weist vorzugsweise mindestens zwei Luft-Kathoden auf, insbesondere weist die Primärzelle mindestens zwei Luft-Kathoden auf, die umfassen eine physikalische Mischung von Manganoxid, Mangandioxid (MnO₂) und einem Leitfähigkeitsvermittler. Ferner ist es bevorzugt, wenn die mindestens zwei Luft-Kathoden und mindestens eine Anode eine Anordnung ausbilden, in der die mindestens eine Anode zwischen den Luft-Kathoden und von dieser beabstandet angeordnet sind. In einer Alternative können vier Luft-Kathoden oder eine ringförmige Luftkathode je einer Anode zugeordnet sein.

Dabei ist es bevorzugt, wenn die mehrzellige Batterie umfassend i) mindestens zwei Primärzellen als Reihenschaltung vorliegt, wobei insbesondere 2 bis 300 Primärzellen in Serie geschaltet sind, und/oder ii) mindestens zwei Primärzellen als Parallelschaltung vorliegen, wobei insbesondere 2 bis 300 Primärzellen parallel-geschaltet sind, und/oder
iii) mindestens drei Primärzellen als Gruppenschaltung vorliegen, umfassend a) Primärzellen die als Reihenschaltung und/oder Gruppen von Primärzellen die als Reihenschaltung vorliegen, und b) Primärzellen, die als Parallelschaltung und/oder Gruppen von Primärzellen, die als Parallelschaltung vorliegen, insbesondere umfassend 3 bis 600 Primärzellen.

Ferner ist es bevorzugt, wenn alle Primärzellen die gleiche Leerlaufspannung aufweisen, insbesondere Primärzellen, die als Reihenschaltung geschaltet vorliegen, Primärzellen, die als Parallelschaltung vorliegen und mit mindestens einer Primärzelle als Reihenschaltung geschaltet vorliegen, Gruppen von Primärzellen, die als Parallelschaltung vorliegen sowie Gruppenschaltungen umfassend die vorgenannten Schaltungen in Kombinationen. Eine mehrzellige Batterie kann 10 bis 15.000 miteinander elektrisch leitend verbundene Primärzellen umfassen, vorzugsweise sind die zwei bis 15.000 miteinander verbundenen Primärzellen in Reihe geschaltet.

Um den Widerstand in den Schaltkreisen zu minimieren, erfolgen in den mehrzelligen Batterien die Kontaktierungen der jeweiligen Anoden und Luftkathoden in einer Reihenschaltung, Parallelschaltung und/oder Gruppenschaltung mittels Stromleiter, insbesondere mittels Stromschienen oder Kabeln massiver metallischer Leiter, insbesondere a) mit einem maximalen Widerstand von kleiner 2 Milliohm/m, vorzugsweise kleiner gleich 1 Milliohm/m, besonders bevorzugt kleiner gleiche 0,5 Milliohm/m, und/oder b) mit Kupfer und einem Querschnitt der Stromleiter von größer gleich 12,6 mm², mit Silber 11,34 mm² oder Aluminium 21,3 mm². Die Stromschiene oder das Kabel ist idealerweise Kupfer-basiert.

Die jeweilige Primärzelle der mehrzelligen Batterie weist ein Anodengehäuse auf, in dem mindestens eine Anode, mindestens eine Luft-Kathode, vorzugsweise mindestens zwei Luft-Kathoden, angeordnet sind. Das Anodengehäuse bildet mit der/den Luft-Kathode(n) einen Hohlraum zur Aufnahme eines Elektrolyten. Vorzugsweise weist das Anodengehäuse, insbesondere bodenseitig, mindestens einen Elektrolyteinlass und mindestens einen Elektrolytauslass auf. Elektrolyteinlass und -auslass werden vorzugsweise durch Öffnungen im Bodenbereich des Anodengehäuses ausgebildet. Wobei die Anordnung von Anode, Luft-Kathode(n) und Hohlraum dergestalt ist, dass zwischen Anode und Kathode ein Stromfluss durch den Elektrolyten möglich ist, wenn der Hohlraum zumindest teilweise bis vollständig mit dem Elektrolyten befüllt ist. Vorzugsweise ist der Hohlraum der Primärzelle über den mindestens einen Elektrolyteinlass und den mindestens einen Elektrolytauslass mit einem Reservoir, insbesondere dem ersten Reservoir, das mit Elektrolyt befüllbar ist, kommunizierend verbunden, wobei vorzugsweise eine Elektrolytfördereinheit dem Elektrolyteinlass zugeordnet ist.

Ferner ist Gegenstand ein Batteriesystem umfassend eine mehrzellige Batterie, wobei das Batteriesystem umfasst mindestens einen ersten elektrischen Schaltkreis umfassend
i) mindestens einen Wechselrichter, insbesondere einen Wechselrichter, der in Kombination mit einem Wärmetauscher betrieben wird, und/oder
ii) mindestens eine Steuereinheit zur Zustandsmessung von Fluiden, wie Gas, Elektrolyt und/oder Spüllösung, insbesondere jeweils Messung der Temperatur, Gehalt an spezifischen Komponenten und/oder Widerstandsmessungen etc. erfolgt, und/oder
iii) mindestens eine Steuereinheit zur Steuerung des ersten Schaltkreises, wobei der Schaltkreis, insbesondere umfasst mindestens einen Wechselrichter sowie Primärzellen, und optional umfassend mindestens eine Steuereinheit zur Zustandsmessung von Fluiden, wie Gas, Elektrolyt und/oder Spüllösung, wobei jeweils vorzugsweise die Temperatur, Gehalt einer Komponente und/oder elektrischer Widerstand ermittelt wird, und/oder Steuerung der Fluide. Vorzugsweise weist jede Primärzelle eine Elektrolytfördereinheit auf.

Im Anodengehäuse jeder Primärzelle kommuniziert der Hohlraum, insbesondere bodenseitig, über mindestens einen Elektrolyteinlass und mindestens einen Elektrolytauslass mit mindestens einem Reservoir, insbesondere einem Elektrolyt-Reservoir. Bevorzugt kommuniziert je ein Hohlraum einer Primärzelle mit je einem Reservoir, vorzugsweise ist der
mindestens eine Elektrolyteinlass mittels einer Zuführleitung und der mindestens eine Elektrolytauslass mittels einer Rücklaufleitung mit einem Reservoir verbunden. Ein Reservoir kann aufgeteilt sein in ein erstes und zweites Reservoir und mit je einem Hohlraum kommunizieren. In einem solchen Fall kann ein Reservoir Elektrolyt und ein weiteres Reservoir eine Spüllösung umfassen. Generell ist es bevorzugt, wenn das Reservoir eine Elektrolytfördereinheit, wie z.B. eine Pumpe, aufweist. Dabei ist es weiter bevorzugt, wenn der Elektrolyteinlass mit einer Elektrolytfördereinheit verbunden ist. Sowohl Elektrolyteinlass als auch Elektrolytauslass können als Öffnung bodenseitig im Anodengehäuse vorgesehen sein.

Im Anodengehäuse ist zwischen Anode und Kathode ein Stromfluss durch den Elektrolyten möglich, wenn der Hohlraum zumindest teilweise bis vollständig mit dem Elektrolyten befüllt ist.

Eine erfindungsgemäße Elektrolytfördereinheit umfasst eine Pumpe, insbesondere eine Alkali-beständige Pumpe, Verdichter oder Umwälzeinheit, bevorzugt eine Membranpumpe, Strömungspumpe, Verdrängerpumpe, Strahlpumpe, Peristaltikpumpe, Schlauchpumpe, Kolbenpumpe, Kolbenmembranpumpe, Drehschieberpumpe, Exenterpumpe, Sumpfpumpe und/oder Vakuumpumpe, wobei Schlauchpumpen bevorzugt sind. Ferner ist eine Elektrolytfördereinheit bevorzugt, die eine Vielzahl von Pumpen umfasst, insbesondere Alkali-beständige Pumpen, bevorzugt Schlauchpumpen, insbesondere die mittels einer zentralen Antriebseinheit betreibbar sind. Vorzugsweise umfasst die zentrale Antriebseinheit einen zentralen Motor für je mindestens zwei Pumpen, und eine zentrale Antriebsstange zum Betrieb von Schlauchpumpen. Beispielsweise können die Pumpen zu Gruppen von Pumpen, beispielsweise 2 bis 6 Pumpen, zusammengefasst und betrieben werden. Diese Gruppen können wiederum an der gemeinsamen Antriebsstange zu einer größeren Baugruppe zusammengefasst werden und als Pumpen betrieben werden.

Des Weiteren weist das Batteriesystem mindestens eine Gasfördereinheit auf, wobei die Gasfördereinheit umfasst einen Verdichter, insbesondere zum Komprimieren von Gasen, Pumpe, Umwälzeinheit, bevorzugt eine Membranpumpe, Strömungspumpe, Verdrängerpumpe, Strahlpumpe, Peristaltikpumpe, Schlauchpumpe, Kolbenpumpe, Kolbenmembranpumpe, Drehschieberpumpe, Exenterpumpe, Sumpfpumpe und/oder Vakuumpumpe.

Ferner umfasst das Batteriesystem mindestens eine Temperiereinheit zur Einstellung der Temperatur des Elektrolyten. Eine mögliche genaue Ausgestaltung wird im Verlauf des nachfolgenden Textes offenbart. Grundsätzlich kann eine Temperiereinheit einen Wärmetauscher und/oder ein Heizmittel umfassen. Bevorzugt weist die Primärzelle, insbesondere das Reservoir einen Wärmetauscher auf, der die Wärme von einem Wärmetauscher, der dem Wechselrichter zugeordnet ist, über einen Wärmtauscher an den Elektrolyten überträgt. Der Elektrolyt im Reservoir wird somit vorzugsweise durch eine Wärmeübertragung mittels eines Wärmetauschers im Wechselrichter temperiert.

Gleichfalls ist Gegenstand der Erfindung ein Verfahren zum Betrieb einer mehrzelligen Batterie oder eines Batteriesystems, indem die mehrzellige Batterie oder das Batteriesystem jeweils als Bestandteil eines ersten Schaltkreises umfassend einen Wechselrichter und als Bestandteil eines zweiten Schaltkreises vorliegen, insbesondere als ein CAN-C oder CAN-Bus oder als Bestandteil eines CAN-C oder CAN-Bus-Systems in einem Netzwerk eines mittels elektrischer Energie angetriebenen Fahrzeuges, eines elektrisch angetriebenen Fahrzeugs mit einem elektrisch angetriebenen Motor und/oder mit einer ersten wiederaufladbaren Batterie, wobei der zweite Schaltkreis mindestens ein Messelement und mindestens ein Steuerelement aufweist, wobei das Messelement Zustandsdaten des elektrisch angetriebenen Motors und/oder der ersten wiederaufladbaren Batterie ermittelt,
- die Zustandsdaten werden an ein Steuerelement übermittelt,
- das Steuerelement klassifiziert die Zustandsdaten in mindestens zwei Klassen, und
- die mindestens zwei Klassen umfassen einen Normalbetrieb und einen Erweiterten-Betrieb, und
- wobei ein Steuerelement im Erweiterten-Betrieb die mehrzellige Batterie oder das Batteriesystem im ersten Schaltkreis des elektrisch angetriebenen Fahrzeuges schaltet, um elektrische Energie in den zweiten Schaltkreis einzuspeisen.

Der erste und zweite Schaltkreis können Bestandteil eines gemeinsamen Schaltkreises sein bzw. eines CAN-C oder CAN-Busses in einem Netzwerk, eines mittels elektrischer Energie angetriebenen Fahrzeuges. Das erfindungsgemäße Verfahren ist vorzugsweise ein computerimplementiertes Verfahren (ein von einem Computer ausgeführtes, gesteuertes, geregeltes Verfahren).

Der zweite Schaltkreis weist vorzugweise mindestens ein Element zur Auswertung von Zustandsdaten und mindestens ein Steuerelement auf, wobei dem Element zur Auswertung von Zustandsdaten, Zustandsdaten des elektrisch angetriebenen Motors und/oder der ersten wiederaufladbaren Batterie übermittelt werden. Nach Auswertung der Zustandsdaten kann die Information Normalbetrieb oder Erweiterter-Betrieb an ein Steuerelement übermittelt werden. Im Erweiterten-Betrieb schaltet ein Steuerelement vorzugsweise den ersten und zweiten Schaltkreis derart, dass elektrische Energie für den Betreib des elektrisch angetriebenen Motors von den mehrzelligen Batterien bereitgestellt wird und/oder an die wiederaufladbare Batterie abgegeben wird, und/oder an davon abweichende elektrische Verbraucher bereitgestellt wird. Als elektrische Verbraucher gelten insbesondere das zentrale Steuersystem des Fahrzeuges und die Steuersysteme für Notsysteme, Bremsen, Bremsleuchten und Motorsteuerung als auch Systeme der umfassend die vorgenannten Komponenten.

Gleichfalls Gegenstand der Erfindung ist ein Verfahren, indem das Steuerelement die mehrzellige Batterie oder das Batteriesystem schaltet, so dass elektrische Energie in den zweiten Schaltkreis eingespeist wird, um i) den elektrisch angetriebenen Motor anzutreiben, oder ii) die Batterie oder das Batteriesystem der ersten wiederaufladbaren Batterie aufzuladen und/oder iii) um einem von i) und ii) abweichenden elektrischen Verbraucher elektrische Energie zuzuführen.

Ein Steuerelement löst vorzugsweise i) im Normalbetrieb einen Schaltvorgang aus, so dass der Elektrolyt im Hohlraum des Anodengehäuses einer bis jeder Primärzelle der mehrzelligen Batterie oder des Batteriesystems in das jeweilige Reservoir abgelassen wird, oder löst ii) im Erweiterten-Betrieb einen Schaltvorgang aus, so dass der Elektrolyt aus dem jeweiligen Reservoir in den jeweiligen Hohlraum des Anodengehäuses einer bis jeder Primärzelle der mehrzelligen Batterie oder des Batteriesystems in das jeweilige Reservoir zugeführt wird und/oder der Elektrolyt im Reservoir temperiert wird.

Im Verfahren der Erfindung ist es ferner bevorzugt, wenn mindestens eine Steuereinheit synonym zu Steuereinheit Zustandsdaten umfassend Spannung, Widerstand einer bis jeder Primärzelle und/oder der Temperatur eines Elektrolyten im Hohlraum des Anodengehäuses einer bis jeder Primärzelle erfasst und in Abhängigkeit der ermittelten Zustandsdaten die Temperatur des Elektrolyten im Hohlraum des Anodengehäuses einer bis jeder Primärzelle anpasst, wie die Temperatur des Elektrolyten, im Reservoir erhöht oder erniedrigt. Alternativ oder zusätzlich kann die mindestens eine Steuereinheit den Elektrolyten im Hohlraum des Anodengehäuses einer bis jeder Primärzelle in Abhängigkeit von den ermittelten Zustandsdaten in das Reservoir ablassen oder aus dem Reservoir zuführen oder Kombinationen davon schalten.

Die mindestens eine Steuereinheit/-element eines Schaltkreises, wobei der Schaltkreis mindestens einen Wechselrichter sowie Primärzellen umfasst, kann vorzugsweise die Ermittlung von Zustandsdaten über Zustandsmessung von Fluiden, wie Gas, Elektrolyt und/oder Spüllösung, wie insbesondere deren Temperatur, Gehalt, elektrischer Widerstand, steuern oder selber ermitteln und vorzugsweise diese Zustände der Fluide direkt oder indirekt steuern.

Ferner ist Gegenstand der Erfindung ein Verfahren zur Ermittlung des Innenwiderstandes mindestens einer elektrochemischen Primärzelle oder einer Gruppe von Primärzellen in einer mehrzelligen Batterie oder im Batteriesystem, mit den Schritten,
i. Messen einer Spannung einer Primärzelle oder einer Gruppe von in Reihe geschalteten Primärzellen zu einer ersten Zeit, zu der die Primärzelle oder die in Reihe geschaltete Gruppe von Primärzellen nicht zu einer elektronischen Last zugeschaltet ist (OCV) und Messung von Uo,
ii. Zuschalten einer elektronischen Last, welches zu einem Stromfluss I1 führt,
iii. Messung der Spannung U1,
iv. Berechnen des Kurzschlussstromes Ik aus diesen Größen und Berechnung des Ri aus Uo/Ik. Ik=(Uo)*IkI1/(Uo-UkI1), optional
v. dynamische und/oder kontinuierliche Wiederholung der Berechnung und optional Abschätzen der Restkapazität.

Eine elektronische Last ist bspw. eine einstellbare elektronische Last (vorzugsweise umfassend einen Messwiderstand und ein MOSFET in einem Regelkreis, insbesondere kann die elektronische Last auch den Umrichter umfassen).

Beansprucht wird zudem ein Verfahren für den Betrieb eines Batteriesystems, indem das Verfahren umfasst a) einen Entladeschritt in dem der Elektrolyt im Hohlraum vorliegt und b) Betrieb einer Primärzelle in Leerlaufspannung,
wobei a) der Entladeschritt die Schritte umfasst
i) Zuführen oder Vorhandensein von Elektrolyt im Hohlraum, und optional Vorhandensein von Elektrolyt im Reservoir,
ii) Entladen der mindestens einen Primärzelle, und optional
   b) Betrieb der Primärzelle in Leerlaufspannung mit den Schritten i) Entfernen des Elektrolyten aus dem Hohlraum, insbesondere in das Reservoir, und optional ii) Zuführen einer protischen Flüssigkeit, die kein Elektrolyt ist, in den Hohlraum, insbesondere aus einem zweiten bzw. weiteren Reservoir. Ein Reservoir kann wie vorstehend ausgeführt auch zweigeteilt ausgeführt sein, um Elektrolyt und Spüllösung voneinander separiert aufnehmen zu können. Bevorzugt werden zeitgleich mehrere Primärzellen nach vorgenanntem Verfahren betrieben, besonders bevorzugt alle Primärzellen des Batteriesystems.

Der b) Betrieb einer Primärzelle in Leerlaufspannung umfasst ii) Zuführen einer protischen Flüssigkeit in den Hohlraum, die kein Elektrolyt ist, insbesondere weist die protische Flüssigkeit einen pH-Wert von 5,5 bis 8 auf und ist bevorzugt wässrig. Der b) Betrieb einer Primärzelle in Leerlaufspannung umfasst ii) Zuführen der protischen Flüssigkeit in den Hohlraum umfassend satzweises, kontinuierliches, diskontinuierliches und/oder periodisches Zuführen der protischen Flüssigkeit.

Ferner umfasst das Verfahren des Betriebs der mindestens einen Primärzelle vorzugsweise einen
a) Entladeschritt mit i) Zuführen oder Vorhandensein von Elektrolyt in den Hohlraum aus dem ersten Reservoir mittels Elektrolytzuführeinheit,
   ii) Entladen der mindestens einen Primärzelle,
b) Betrieb einer Primärzelle in Leerlaufspannung,
   i) Entfernen des Elektrolyten aus dem Hohlraum und
   ii) Zuführen der protischen Flüssigkeit, die kein Elektrolyt ist, insbesondere aus dem zweiten Reservoir,
   iii) Entfernen der protischen Flüssigkeit, die kein Elektrolyt ist aus dem Hohlraum, insbesondere in das zweite Reservoir, wobei die Schritte b) ii) und iii) kumulativ erfolgen oder ausgelassen werden, optional erfolgt in b) ii) ein Einstellen der Temperatur der protischen Flüssigkeit,
wobei die Schritte a) Entladeschritt und b) Betrieb in Leerlaufspannung abwechselnd nacheinander durchgeführt werden und vorzugsweise wiederholt nacheinander durchgeführt werden.

Die Verfahrensschritte können einzeln, in Gruppen oder als Gesamtverfahren als ein computerimplementiertes Verfahren (ein von einem Computer ausgeführtes Verfahren) erfolgen.

In einem zweiten Reservoir kann eine protische Flüssigkeit, insbesondere als Spüllösung, vorliegen die kein Elektrolyt ist, insbesondere weist die protische Flüssigkeit einen pH-Wert im Bereich von 5,5 bis 8 auf, bevorzugt ist die protische Flüssigkeit wässrig.

Zwischen Reservoir und/oder in der Elektrolytfördereinheit, wie Pumpe, für den Elektrolyten kann vorzugsweise mindestens eine Absperrarmatur angeordnet sein, die zum Regeln des Zuführens und Entfernen des Elektrolyten, insbesondere des alkalischen Elektrolyten, geeignet ist.

Gleichfalls Gegenstand der Erfindung ist ein Verfahren zum Betrieb eines Batteriesystems, das eine Temperiereinheit zur Einstellung der Temperatur des Elektrolyten aufweist, indem das Verfahren zum Betrieb der mindestens einen Primärzelle umfasst a) einen Entladeschritt in dem Elektrolyt im Hohlraum vorliegt und optional b) Betrieb in Leerlaufspannung, wobei a) der Entladeschritt die Schritte umfasst, i) Einstellen der Temperatur des Elektrolyten auf eine definierte Temperatur, insbesondere auf eine Temperatur größer gleich 26 °C, iii) optional Entladen der mindestens einen Primärzelle.

Ferner kann das Verfahren die Schritte umfassen a) einen Entladeschritt und optional b) Betrieb in Leerlaufspannung, wobei a) der Entladeschritt die Schritte umfasst i) optional Vorlegen von Elektrolyt in dem Reservoir und ii) Vorlegen von Elektrolyt, insbesondere eines wässrigen, alkalischen Elektrolyten, im Hohlraum, iii) optional Entladen der mindestens einen Primärzelle, und Einstellen der Temperatur des Elektrolyten auf eine definierte Temperatur i) im Reservoir, in einer Leitung zwischen Reservoir und Hohlraum und/oder ii) im Hohlraum, insbesondere auf eine Temperatur größer gleich 26 °C.

Die Einstellung der Temperatur kann mittels eines Wärmetauschers erfolgen, der von einem Wärmetauscher im Wechselrichter gespeist wird.

Nach einer bevorzugten Alternative kann die Temperatur des Elektrolyten auf eine Temperatur größer gleich 30 °C bis unter 95 °C eingestellt werden, insbesondere wird die Temperatur des Elektrolyten auf eine Temperatur größer gleich 40 °C und, bevorzugt auf kleiner gleich 100 °C eingestellt. Dabei sind Temperaturen des Elektrolyten von größer 50 °C, bevorzugt von größer gleich 60 °C, besonders bevorzugt.

Der Aufbau der Primärzellen wird nachfolgend detaillierter beschrieben.

Eine erfindungsgemäße Primärzelle umfasst ein Anodengehäuse in dem die mindestens eine Anode A angeordnet ist und an dem mindestens zwei Kathoden B, insbesondere zwei Luft-Kathoden B angeordnet sind. Dabei erfolgt eine Luftzufuhr von der Oberseite des Anodengehäuses. Ein optionales Elektrolytmanagement erfolgt vorzugsweise durch Leitungen an der Unterseite des Anodengehäuses.

Ein erfindungsgemäßer Anodenstapel umfasst vorzugsweise 2 bis 1000 Anodenplatten, besonders bevorzugt 5 bis 200 Anodenplatten, besonders bevorzugt 10 bis 200. Des Weiteren ist es bevorzugt, wenn die Anodenplatten des Anodenstapels aus Silizium oder einer Siliziumlegierung gebildet sind oder zumindest mehr als 50 Gew.-%, bevorzugt mehr als 90 Gew.-% der Gesamtzusammensetzung von 100 Gew.-% der Anodenplatte bilden.

Die Anodenplatten gemäß der Erfindung können umfassen Scheiben, flächige Gebilde, flächige Polyeder, flächige Prismen, Zylinder oder sonstige flächige Elemente. Eine bevorzugte Anodenplatte weist Seitenflächen auf, die eine Vorderseite und eine der Vorderseite gegenüberliegende Rückseite aufweisen sowie mindestens eine die Vorder- und Rückseite verbindende mindestens eine seitliche Seitenfläche, insbesondere mindestens eine umlaufende Seitenfläche. Vorder- und Rückseite weisen eine ausgedehntere Oberfläche auf als die jeweiligen Seitenflächen. In einer besonders bevorzugten Ausführungsform ist eine Anodenplatte ein Quader mit rechteckiger Vorder- und Rückseite sowie vier rechteckigen, die Vorder- und Rückseite der Anodenplatte verbindenen, Seitenflächen. Alternativ kann eine Anodenplatte eine Scheibe mit primatischer Geometrie sein. Als flächig gilt eine Anode, wenn die Höhe der Seitenfläche mindestens die Hälfte einer Seitenkante der Vorder- und/oder Rückseite beträgt, bevorzugt beträgt die Höhe kleiner 1/10 einer Seitenkante der Vorder- und/oder Rückseite einer Anode, insbesondere Anodenplatte.

Im Anodenstapel liegen die Anodenplatten jeweils parallel voneinander, um eine definierte Distanz voneinander, beabstandet vor. Dabei sind jeweils benachbarte Anodenplatten an ihren Vorder- und Rückseiten jeweils voneinander beabstandet zu einem Anodenstapel angeordnet. Bevorzugt sind die Vorder- und Rückseiten der Anodenplatten im Anodenstapel von einander im Wesentlichen gleichmäßig voneinander, beabstandet. Die Distanz zwischen den Vorder- und Rückseiten benachbarter Anodenplatten kann im Bereich von 0,1 mm bis 5 cm betragen, bevorzugt von 0,2 mm bis 5 mm. Der Abstand der Anodenplatten im Anodenstapel soll einen ausreichenden Elektrolytaustausch im Bereich zwischen den Anodenplatten gewährleisten, so dass die Leistung der Primärzelle nicht durch Diffusionsvorgänge limitiert wird. Um eine ausreichende Konvektion oder Umströmung der Oberfläche, insbesondere der Vorder- und Rückseite der Anodenplatten, zu gewährleisten, weist die Primärzelle zudem eine Elektrolytzu- und -abführung auf, die einen Austausch des Elektrolyten ggf. unter laminarer oder turbulenter Strömung zu ermöglichen.

Ein weiterer Vorteil der Anodenplatten der Erfindung ist, dass durch den Aufbau der Primärzelle grundsätzlich die innere und äußere Geometrie der Anoden flexibel wählbar sind. So ist Gegenstand der Erfindung eine Anode aus Silizium, insbesondere Anodenplatte(n) die umfassen Silizium-Anodenplatten, wobei die Silizium-Anodenplatten umfassen oder gebildet wurden aus
i) Silizium-Partikel, insbesondere umfassend Silziumpartikel oder Partikel einer Siliziumlegierung oder Mischungen davon, und/oder
ii) ein Trägergerüst, welches gebildet ist aus stoffschlüssig miteinander verbundenen Silizium-Partikeln, insbesondere wobei die Silizium-Primärpartikel eine Partikelgröße zwischen 1 nm bis 500 Mikrometer, bevorzugt 1 nm bis 30000 nm aufweisen, und die Silizium-Primärpartikel optional im Wesentlichen kristallin, polykristallin und/oder amorph sind,
iii) einem Schwamm, d.h. einer schwammartigen oder geschäumten Struktur, umfassend Silizium, insbesondere umfassen Siliziumschwamm oder Schwamm mindestens einer Silizium-Legierung und/oder eine geschäumte Struktur umfassend Silizium, und/oder
iv) einen dreidimensionalen Formkörper mit äußerer Oberfläche und innerer Oberfläche, wobei der dreidimensionale Formkörper umfasst Silizium-Partikel und/oder Siliziumfaser und/oder Siliziumstäbe, insbesondere Silizium-Partikel einer Partikelgröße von 1 bis 5000 Mikrometer, insbesondere von 1 nm bis 30 Mikrometer, wobei die Silizium-Partikel an Kontaktpunkten zu benachbarten Silizium-Partikeln stoffschlüssig, insbesondere mittels des Matrixmaterials, vorzugsweise Silizium, miteinander verbunden sind.

Eine Anode, insbesondere eine Anodenplatte kann vorzugsweise eine Dichte von 0,1 g/cm³ bis 2,3 g/cm³ aufweisen. Des Weiteren ist es bevorzugt, wenn die flächigen Anoden, insbesondere Anodenplatten im Wesentlichen eine planare Vorder- und Rückseite aufweisen.

Dabei ist es bevorzugt, wenn in den Silizium-Anodenplatten a) die Silizium-Partikel oder die b) stoffschlüssig miteinander verbundenen Siliziumpartikel und/oder c) die an Kontaktpunkten verbundenen Silizium-Partikel miteinander i) verschmolzen und/oder ii) versintert und/oder iii) verpresst sind.

Dabei ist es bevorzugt, wenn das Anodenmaterial im geladenen Zustand kein Lithium umfasst. Bevorzugte Primärzellen, insbesondere Anoden, Anodenstapel und/oder Anodenplatten der Erfindung sind vorzugsweise frei von Lithium, wobei vorzugsweise unter frei von Lithium verstanden wird, dass der Gehalt an Lithium im geladenen Zustand in der Primärzelle, insbesondere umfassend die Anode, die Kathode und den Elektrolyten, kleiner gleich 10 Gew.-%, insbesondere kleiner 1 Gew.-%, insbesondere kleiner gleich 0,1 Gew.-% in der Primärzelle beträgt, vorzugsweise beträgt der Gehalt an Lithium im Elektrodenmaterial der Anode im geladenen Zustand kleiner gleich 0,1 Gew.-%. Elektrochemische Primärzellen und insbesondere Anoden für elektrochemische Prozesse mit einem Lithiumgehalt unter 1 Gew.-%, vorzugsweise kleiner gleich 0,1 Gew.-%, gelten als frei von Lithium und können erfindungsgemäß als reine Silizium-Zellen oder reine Silizium-Anoden bezeichnet werden. Insbesondere weist das Anodenmaterial diesen Gehalt sowohl im geladenen Zustand als auch während der Entladung auf. Zudem ist es bevorzugt, wenn die Kathode, insbesondere das Kathodenmaterial unter 1000 Gew.-ppm Lithium enthält. Ferner ist es bevorzugt, wenn die Primärzelle umfassend Anode und Kathode sowie optional Elektrolyt, einen Gesamtgehalt an Lithium, insbesondere Lithium-Ionen, von kleiner gleich 10000 Gew.-ppm, bevorzugt kleiner 5000 Gew.-ppm, besonders bevorzugt kleiner 1000 Gew.-ppm enthält.

Ein das Siliziummaterial der Silizium-Anodenplatten, eines Trägergerüstes oder einer netzartigen Umhüllung der Anodenstapel, kann vorzugsweise Silizium umfassen aber auch Eisen enthaltendes Silizium bspw. Silizium mit einem Eisengehalt von 0,5 Gew.-% in der Gesamtzusammensetzung des Siliziummaterials, Umhüllung oder des Trägergerüstes und/oder der Silizium-Partikel aufweisen (Gesamtzusammensetzung 100 Gew.-%). Silizium-Anodenplatten können ferner umfassen Silizium-Kohlenstoff-Komposite oder Legierungen.

In bevorzugten Ausführungsformen weist eine oder weisen die Anodenplatte(n) auf mindestens einem Anteil der jeweiligen Seitenfläche einer Anodenplatte, insbesondere auf der äußeren Oberfläche, eine elektrisch leitfähige Beschichtung oder Zusammensetzung auf, insbesondere einer i) elektrisch leitfähigen, metallischen Legierung oder eines Metalls zur elektrischen Kontaktierung, ii) eines elektrisch leitfähigen Polymers, iii) eines elektrisch leitfähigen Polymers umfassend Partikel oder Fasern von elektrisch leitenden Metallen oder Legierungen, wobei vorzugsweise die Leitfähigkeit des Polymers größer 10 S/m, bevorzugt größer 10⁴ S/m betragen soll, und/oder iv) elektrisch leitfähigen Zusammensetzungen, umfassend Kohlenstoff, v) Lot. Als Lote kommen Hart- und Weichlot in Betracht.

Dabei ist es bevorzugt, wenn der dreidimensionale Formkörper auf mindestens einem Teil seiner äußeren Oberfläche eine Beschichtung oder Zusammensetzung einer leitfähigen metallischen Legierung oder eines Metalls zur elektrischen Kontaktierung aufweist. Als Beschichtung oder Zusammensetzung gelten insbesondere elektrisch leitfähige Lote, wie Hart- oder Weichlot. Die Kontaktierung eines Anodenstapels kann bspw. erfolgen, indem der Anodenstapel auf eine Zusammensetzung, die an der Anodenhalterung vorliegt, eingedrückt wird. Diese Zusammensetzung kann ggf. aushärten, trocknen und/oder getempert werden, um ggf. vorhandene Flussmittel, Harze, Wasser etc. zu verdampfen.

In weiteren bevorzugten Ausführungsformen weist eine oder weisen die Anodenplatte(n) auf mindestens einem Anteil der jeweiligen Seitenfläche einer Anodenplatte, insbesondere auf der äußeren Oberfläche, eine elektrisch leitfähige Beschichtung oder Zusammensetzung auf mindestens einem Anteil einer Seitenfläche eine elektrisch leitfähige Zusammensetzung auf, um eine stoffschlüssige und/oder formschlüssige Kontaktierung mit der Anodenhalterung zu ermöglichen, wobei die Zusammensetzung umfasst i) elektrisch leitfähige metallische Legierung oder ein Metall zur elektrischen Kontaktierung, ii) elektrisch leitfähiges Polymer, iii) elektrisch leitfähiges Polymer umfassend Partikel oder Fasern von elektrisch leitendem Metall oder Legierung, wobei die Leitfähigkeit bevorzugt größer 10 S/m, bevorzugt größer 10⁴ S/m betragen soll, iv) elektrisch leitfähige Zusammensetzung umfassend Kohlenstoff.

Das Anodenmaterial einer Anode, insbesondere die Anodenplatten, umfassen gemäß einer Alternative der Erfindung ein Anodenmaterial mit 20 bis 75 Gew.-%, vorzugsweise von 20 bis 60 Gew.-%, Silizium, insbesondere partikuläres Silizium, bevorzugt Silizium-Partikel, und einen Kohlenstoff enthaltenden Leitfähigkeitsvermittler, vorzugsweise in Form eines elektrisches Ableitgitters, insbesondere von 25 bis 80 Gew.-%, bevorzugt von 40 bis 80 Gew.-%, und optional weitere Additive auf 100 Gew.-% des Anodenmaterials. Der Leitfähigkeitsvermittler umfasst vorzugsweise Kohlenstoff enthaltende Partikel, insbesondere einer Partikelgröße von 20 bis 100 nm, insbesondere 25 bis 80 nm. Ein besonders bevorzugtes Anodenmaterial der Anode umfasst zu 45 bis 55 Gew.-% Silizium-Partikel und zu 55 bis 45 Gew.-% einen Kohlenstoff enthaltenden Leitfähigkeitsvermittler, wobei die Gesamtzusammensetzung des Anodenmaterials 100 Gew.-% beträgt, insbesondere des Anodenmaterial ohne Elektrolyt, d.h. trockenes Anodenmaterial. Das Anodenmaterial kann Bindemittel wie Acrylat und/oder Cellolosen umfassen. Das Anodenmaterial kann als Formkörper vorliegen, der bspw. mittels eines Strangpressverfahrens zu einer Anode geformt wurde.

Bevorzugte elektrisch leitfähige Zusammensetzungen umfassend Kohlenstoff umfassen Kohlenstoffmodifikationen, insbesondere Kohlenstoff enthaltenden Leitfähigkeitsvermittler, wie bevorzugt Graphen, Graphit, Leitruß und/oder Mischungen, bevorzugt umfasst die Zusammensetzung mindestens zwei der vorgenannten Komponenten. Des Weiteren weisen die vorgenannten Zusammensetzungen oder Lote bei deren Applikation ein Flussmittel auf. Als Lot kommen in Betracht Hart- oder Weichlot. Weichlote können aufgrund der niedrigeren Temperatur zur Ausbildung der Kontaktierung bevorzugt sein. Geeignete Lote können beispielsweise jene sein, die auch zur Kontaktierung in Bremsflüssigkeiten oder in anderen flüssigen Medien verwendet werden.

Elektrisch leitfähige iv) Zusammensetzungen umfassend Kohlenstoff können vorzugsweise umfassen mindestens eine Kohlenstoffmodifikation oder Gemische von Kohlenstoffmodifikationen, bevorzugt Graphen, Graphit, Leitruß und/oder Mischungen umfassend mindestens zwei vorgenannte Komponenten und optional leitfähige Polymere oder Bindemittel, wie Cellulose.

In einer weiteren bevorzugten alternativen Ausführungsform kann ein Anodenstapel umfassen 2 bis 1000 Anodenplatten, besonders bevorzugt 5 bis 200 Anodenplatten, besonders bevorzugt 10 bis 200. Des Weiteren kann es bevorzugt sein, wenn die Anodenplatten des Anodenstapels aus Silizium oder einer Siliziumlegierung gebildet sind oder zumindest mehr als 50 Gew.-%, bevorzugt mehr als 90 Gew.-% der Gesamtzusammensetzung von 100 Gew.-% der Anodenplatte bilden. In die Gesamtzusammensetzung werden keine elektrisch leitenden Materialien mit einer elektrischen Leitfähigkeit von größergleich 10 S/m (271 K) eingerechnet. In die Gesamtzusammensetzung dieser Anodenplatten wird ein in der Anodenplatte integrierter Stromsammler nicht eingerechnet. Als ein Stromsammler gilt ein elektrischer Leiter aus einem elektrisch leitenden Material, insbesondere umfassend Eisen, Eisenlegierung, Kupfer, Kupferlegierung, Aluminium, Aluminiumlegierung oder ein anderweitiges elektrisch leitendes Material umfassend metallische Legierungen mit einer elektrischen Leitfähigkeit von größer gleich 10 S/m (271 K), optional mit einem Gehalt an Kohlenstoff, oder Mischungen enthaltend diese. Als elektrischer Leiter gilt ein Material mit einer elektrischen Leitfähigkeit (σ) von größer gleich 10 S/m (271 K). Ein Stromsammler kann in verschiedenen Leiterklassen vorliegen, Übliche Leiterklassen umfassen Leiterklassen 1 bis 6. Alternativ kann ein Stromsammler als Netz, Gewebe oder Vlies vorliegen.

Die erfindungsgemäße Primärzelle umfasst ein Anodengehäuse, in dem die Anode A angeordnet ist. Das Anodengehäuse weist einen Elektrolyteinlass und einen Elektrolytauslass auf, um während des Betriebs der Primärzelle oder im Stillstand den Elektrolyten ablassen, zuführen, austauschen, temperieren, verdünnen oder auf sonstige Art und Weise modifizieren zu können. Das Anodengehäuse weist einen Hohlraum zur Aufnahme eines Elektrolyten auf, wenn die Kathodenöffnungen durch Anordnung der Kathoden B am Anodengehäuse verschlossen sind. Die Kathodenöffnungen am Anodengehäuse werden mittels Dichtmittel fluiddicht nach außen bzw. gegen einen Austritt des Elektrolyten gesichert.

Das Anodengehäuse weist daher neben der Anodenöffnung zur Aufnahme der Anode A, in der, der Anodenöffnung gegenüberliegenden Seite des Anodengehäuses, mindestens einen Elektrolyteinlass und/oder mindestens einen Elektrolytauslass auf. Durch diese Maßnahme ist eine gute Anströmung der Zwischenräume in den Anodenstapeln gewährleistet.

Das Anodengehäuse umschließt vorzugsweise einen Hohlraum zur Aufnahme eines Elektrolyten, wenn die Kathodenöffnungen durch Anordnung der Kathoden B am Anodengehäuse verschlossen sind, die Kathodenöffnungen sind vorzugsweise an seitlichen Seitenflächen des Anodengehäuses, insbesondere einander gegenüberliegend angeordnet. Die Anodenöffnung ist im Anodengehäuse vorzugsweise auf der Oberseite des Anodengehäuses angeordnet. Besonders bevorzugt ist das Anodengehäuse quaderförmig, mit auf der Oberseite angeordneter Anodenöffnung, mit mindestens ein bis 4 Kathodenöffnungen an den seitlichen Seitenflächen des Anodengehäuses und mit mindestens einem Elektrolyteinlass und einem Elektrolytauslass, wobei der mindestens eine Elektrolyteinlass und der mindestens eine Elektrolytauslass an der Unterseite des Anodengehäuses angeordnet sind. Die Kathodenöffnungen am Anodengehäuse werden vorzugsweise mittels Dichtmittel fluiddicht nach außen bzw. gegen einen Austritt des Elektrolyten gesichert.

Das Anodengehäuse weist daher vorzugsweise neben der Anodenöffnung zur Aufnahme der Anode A, in der, der Anodenöffnung gegenüberliegenden Seite des Anodengehäuses mindestens einen Elektrolyteinlass und/oder mindestens einen Elektrolytauslass auf. Diese Anordnung auf der, den Anodenplatten gegenüberliegenden Seite, ermöglicht die Einstellung einer einmaligen bis ständigen und/oder gepulsten, guten und vorzugsweise homogenen Anströmung der Anodenplatten mit Elektrolyten, wenn dies entsprechend gesteuert wird.

Das Anodengehäuse kann grundsätzlich jede sinnvolle Geometrie aufweisen. Bevorzugt weist das Anodengehäuse die Form eines Polyeders, bevorzugt im Wesentlichen eines Quaders, mit mindestens drei Seitenflächen auf, wobei eine Seitenfläche des Anodengehäuses eine Anodenöffnung zur Aufnahme der Anode A aufweist, dabei wird die Anodenöffnung durch den Gehäuseteil der Anoden bei eingesetzter Anode A verschlossen. Ein bevorzugtes Anodengehäuse ist ein Quader ggf. mit abgerundeten Ecken mit sechs Seitenflächen.

In die Anodenöffnung kann die Anode A eingesetzt werden. Die Anode A wird vorzugsweise durch einen Anodenstapel umfassend Anodenplatten gebildet. Der Anodenstapel ist vorzugsweise an einem Gehäuseteil angeordnet, insbesondere ist der Anodenstapel an dem Gehäuseteil mittels einer Anodenhalterung befestigt, bevorzugt umfasst das Gehäuseteil mindestens einen Anodenanschluss. Der Anodenstapel weist größer zwei bis 200 Anodenplatten in gestapelter und voneinander beabstandeter Anordnung auf.

Des Weiteren weist das Anodengehäuse mindestens eine, vorzugsweise mindestens zwei Kathodenöffnungen auf, wobei an einer Kathodenöffnung je eine Kathode B angeordnet werden kann. Der Aufbau des Anodengehäuses erlaubt einen Austausch der Anode oder Kathode auf einfache Weise, so dass die Primärbatterie nach Verbrauch der Anode auf einfache Art und Weise zerlegt und wieder aufbereitet werden kann. Die beiden oder mehreren Kathodenöffnungen sind vorzugsweise an seitlichen Flächen des Anodengehäuses angeordnet, während die Anodenöffnung in der Oberseite des Anodengehäuses angeordnet ist.

Somit ist Gegenstand der Erfindung eine Primärzelle, die gebildet wird durch ein Anodengehäuse mit Anodenöffnung zur Aufnahme der Anode A, wobei das Anodengehäuse mindestens zwei Kathodenöffnungen aufweist, wobei an je einer Kathodenöffnung je eine Kathode B angeordnet werden kann. Ferner weist das Anodengehäuse Elektrolyteinlässe und/oder Elektrolytauslässe auf, die vorzugsweise an der der Anodenöffnung gegenüberliegenden Unterseite des Anodengehäuses angeordnet sind. Grundsätzlich können diese Ein- und/oder Auslässe an jeder sinnvollen Seite des Anodengehäuses angeordnet sein. Daher können sie auch an der seitlichen Seitenfläche des Anodengehäuses im Bereich der Kathodenöffnungen oder unterhalb der Kathodenöffnungen vorgesehen sein. Für einen leichten Wechsel der verbrauchten Kathoden oder einer Reinigung des Anodengehäuses wird die Anbringung an der Unterseite des Anodengehäuses bevorzugt.

Erfindungsgemäß ist die Kathode B eine Luft-Kathode. Die Kathode umfasst ein Kathodengehäuse, mindestens einen Kathodenanschluss, mindestens eine Öffnung für einen Austausch von Gas umfassend Sauerstoff, wie Luft und/oder Gasgemisch umfassend Sauerstoff. Das Kathodengehäuse weist mindestens drei Seitenflächen auf, insbesondere sechs Seitenflächen, insbesondere planare Seitenflächen, wobei eine Seitenfläche des Kathodengehäuses mindestens eine Kathodenöffnung aufweist, auf der, in der oder hinter der eine Kontaktplatte angeordnet werden kann oder, die mit einer Kontaktplatte als Teil des Kathodengehäuses versehen ist. Die Kontaktplatte kann gitterförmig, gelocht, gestanztes Blech, poröse Platte, gesinterte Platte und/oder eine Kontaktplatte mit Membran(en) sein. Grundsätzlich sind alle plattenartigen Elemente geeignet, die den Kontakt zwischen Elektrolyten und Kathodenmaterial herstellen können und zugleich mechanisch das Kathodenmaterial im Kathodengehäuse fixieren. Optional weist die Kathode mindestens einen Kathodenanschluss auf. Das jeweilige Kathodengehäuse ist vorzugsweise quaderförmig. Die Primärzelle, umfassend ein bis vier Kathodengehäuse, ist vorzugsweise ebenfalls quaderförmig, um eine möglichst platzsparende Anordnung in einer mehrzelligen Batterie zu ermöglichen.

Besonders bevorzugt ist eine Anode A in der Anodenöffnung des Anodengehäuses fluiddicht angeordnet. Des Weiteren ist es bevorzugt, wenn auch die Kathoden B an den Kathodenöffnungen des Anodengehäuses fluiddicht angeordnet sind. Als fluiddicht wird eine Dichtigkeit der gebildeten Gehäusehülle verstanden, um eine Leckage des Elektrolyten zu vermeiden. Der einzufüllende Elektrolyt ist vorzugsweise ein wässriger, stark alkalischer Elektrolyt.

Unter fluiddicht wird vorliegend verstanden, dass aus dem Anodengehäuse mit angeordneten Kathodengehäusen kein Elektrolyt unbeabsichtigt austreten kann, d.h. die Anoden- und Kathodenöffnungen sind fluiddicht, insbesondere durch Verwendung von Dichtungen, O-Ringen, dichtenden Rahmen, etc.

Der Separator ist zudem zwischen dem Anodengehäuse und den Kathodengehäusen angeordnet. Somit ist vorzugsweise der jeweilige Separator S in oder auf der jeweiligen Kathodenöffnung des Anodengehäuses und auf der Kontaktplatte der jeweiligen Kathode oder des jeweiligen Kathodengehäuses angeordnet und trennt die Anode A von der jeweiligen Kathode B. Die Anordnung ist fluiddicht, um ein Austreten des Elektrolyten aus den Gehäusen zu vermeiden. Aus der Primärzelle kann somit kein Fluid an diesen Öffnungen austreten. Die elektrisch leitende Verbindung zwischen Anode und Kathode(n), insbesondere der Transport elektrischer Ladungsträger, wie Ionen, Elektronen, ist möglich.

Ein Separator, insbesondere ein Batterieseparator, in einer Alkali-Batteriezelle wird zum Trennen einer negativen Elektrode von einer positiven Elektrode verwendet, wenn sie in einem geeigneten Elektrolyten angeordnet sind. Neben der Trennung der Elektroden, d.h. Anode und Kathode, weist der Separator während des Betriebs der Zelle, wenn die normalen chemischen Reaktionen ablaufen, einen verhältnismäßig niedrigen Widerstand gegenüber der Elektrolytionenübertragung, jedoch einen beträchtlich hohen Widerstand gegenüber der Elektrodenionenübertragung auf.

Der Separator wird beispielsweise gebildet durch Aufbringen eines verbesserten Coatings auf ein Substrat. Bei dem Separator handelt es sich in der Regel um ein flexibles, faseriges und poröses Substrat, das gegen starkes Alkali und gegen Oxidation beständig ist. Der Separator kann ein Composite sein und kann vorzugsweise auf mindestens einem Polymer, wie Polyethylen, Polypropylen, Polyacrylat, Lingnocellulose, Cellulose und/oder Mikrozellulose basieren.

Die Coating- bzw. Überzugszusammensetzung des Separators umfasst beispielsweise eine Mischung aus einem polymeren Bindemittel, einem hydrolysierbaren polymeren Ester und inerten Füllstoffen. Ein geeignetes polymeres Bindemittel ist Ethylen-Propylen-Kautschuk. Ein geeigneter hydrolysierbarer Ester ist ein filmbildendes Polyacrylat. Bei den inerten Füllstoffen kann es sich unter anderem um ein in Alkali unlösliches Pigmentmaterial einschließlich Kaolin, Metalloxiden und/oder Titanaten handeln. Der auf diese Weise hergestellte bzw. beschichtete Separator in den alkalischen Elektrolyten eingetaucht wird, reagiert der hydrolysierbare polymere Ester chemisch mit dem Elektrolyten unter Bildung eines polymeren Salzes und eines Alkohols. Der Alkohol geht in Lösung. Das Salz, das während der Hydrolyse gebildet wird und in dem Überzug zurückgehalten wird, dehnt sich aus durch weiteres Eindringen des Elektrolyten. Diese Ausdehnungskräfte der Polymerketten des Bindemittels führen zu einer weiteren Ausdehnung und zu einer Vergrößerung des intermolekularen Abstandes. Die in einem größeren Abstand voneinander angeordneten intermolekularen Ketten des polymeren Bindemittels ergeben eine Gesamtzunahme der Porosität des Filmüberzugs. Die daraus resultierende Zunahme der Porosität des Überzugs erlaubt eine schnellere Diffusion der Elektrolyt-Ionen durch den Separator, während sie noch eine wesentliche Sperrschicht (Sperre) für die von den Elektroden emittierten großen Ionen darstellt.

Gleichfalls Gegenstand der Erfindung ist eine mehrzellige Batterie, wobei die Batterie mindestens zwei bis 15.000 mit einander verbundene Primärzellen umfasst, vorzugsweise sind die zwei bis 15.000 mit einander verbundenen Primärzellen in Serie geschaltet.

Die Anode ist vorzugweise frei von Lithium insbesondere im geladenen Zustand.

Gegenstand der Erfindung ist auch eine elektrochemische Primärzelle aufweisend eine Anode, eine Kathode, optional einen Elektrolyten sowie mindestens einen Separator, wobei der Separator die Kathode und die Anode voneinander separiert, und die Kathode vorzugsweise umfasst als Material Manganoxid und/oder Mangandioxid oder Nichtedelmetallkatalysator und optional Kohlenstoff enthaltenden Leitfähigkeitsvermittler, wobei die Anode als Anodenmaterial Silizium umfasst.

Nickel-Kobalt-Cyanide stehen beispielhaft für die Klasse von Nichtedelmetallkatalysatoren mit hervorragender Elektroaktivität für die Sauerstoffreduktionsreaktion im neutralen Elektrolyten. Die Zubereitung der Ni/Co-dotierten C-N-Hohl-Nanoröhren-Verbundkatalysatoren (C-N, Co/C-N, Ni/C-N und Ni-Co/C-N) erfolgt durch eine einfache Pyrolyse des Ni/Co-Salz~Dicyandiamid~Glucose~Gemenges. Eine entsprechende Silizium-Luft-Batterie wurde in einem neutralen Medium unter Verwendung der vorbereiteten Probe als Katalysator für die Luftelektrode montiert und zeigte eine hervorragende Entladungsleistung und Stabilität.

Gleichfalls kann eine Membran, insbesondere eine Gasdiffusionselektrode umfassend eine PTFE-Schicht, wie bspw. Von der Firma Gaskatel, eingesetzt werden. Die Gasdiffusionselektrode kann eine Membran und/oder ein Stahlgitter, vorzugsweise aus einem plattierten Stahldraht bspw. Nickelplattiert sein. Gleichfalls kann eine Gasdiffusionselektrode umfassend eine PTFE-Schicht, wie bspw. von Firma Gaskatel, eingesetzt werden. Gasdiffusionselektroden können alternativ Membranen aus den folgenden Materialien umfassen Ethylcellulose, Polyphenylenoxid, Polymethylpenten, modifziertes Poylcarbbonat, Cellulosetriacetat, Celluloseacetat, Polydimethylsiloxan (PDMS), PSDM mit PC, Polysulfon mit PDMS oder Polyimid.

Im Kathodengehäuse der Erfindung kann Kathodenmaterial vorliegen, das umfassen kann
a) Manganoxid und/oder Mangandioxid als Kathodenmaterial, oder
b) Manganoxid, insbesondere Manganoxid und/oder Mangandioxid, Platin, Platin-Basis, Silber einzeln oder gemeinsam als Katalysator.

Das Kathodenmaterial kann ferner umfassen 70 bis 95 Gew.-% in der Gesamtzusammensetzung von 100 Gew.-% des Kathodenmaterials Mangandioxid und auf 100 Gew.-% des Kathodenmaterials einen Kohlenstoff enthaltenden Leitfähigkeitsvermittler und optional weitere Additive umfasst, insbesondere umfasst die Kathode als Leitfähigkeitsvermittler Kohlenstoff enthaltende Partikel oder eine Kohlenstoff enthaltende Paste.

Ist die Kathode eine Luftkathode kann das Kathodenmaterial ggf. zusätzlich Silber als Katalysator umfassen, insbesondere nanopartikuläre Silberartikel.

Das Anodenmaterial kann umfassen Silizium, insbesondere Silizium-Partikel, sowie Leitfähigkeitsvermittler, insbesondere umfasst der Leitfähigkeitsvermittler Kohlenstoff enthaltende Partikel oder eine Kohlenstoff enthaltende Paste. Im Anoden- oder Kathodenmaterial können die i) Kohlenstoff enthaltenden Partikel umfassen Ruß, Leit-Ruß, elektrochemisch hergestellten Ruß, Graphit, Graphen und/oder ii) die Kohlenstoff enthaltende Paste kann elektrisch leitfähige Polymere und/oder Graphen als Kohlenstoff enthaltenden Leitfähigkeitsvermittler aufweisen.

Die Siliziumanode, insbesondere das Anodenmaterial oder die Anodenplatten umfassend Silizium können umfassen Dotierstoffe. Wobei die Dotierstoffe umfassen oder ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon und optional ausgewählt sind aus Elementen der Eisengruppe. Dabei ist es bevorzugt, wenn Silizium des Anodenmaterials Dotierstoffe umfasst, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen.

Die Beschichtung oder die Zusammensetzung einer leitfähigen metallischen Legierung oder eines Metalls zur elektrischen Kontaktierung umfasst vorzugsweise Elemente der Gruppen 3 bis 11, vorzugsweise der Gruppen 8. bis 11., und besonders bevorzugt der Gruppen 3 bis 11 der IV, V und VI Periode des Periodensystems (Hauptgruppen 3 bis 11), besonders bevorzugt sind die Elemente der Gruppe 8. bis 11. und der V und VI Periode, bevorzugt sind Edelmetalle, umfassend Gold, Ruthenium, Rhodium, Osmium, Iridium, Platin und/oder Silber.

Nach bevorzugten Ausführungsformen kann die Anode Anodenplatten umfassen, die aus Silizium gebildet sind und umfassen können Silizium, insbesondere Silizium-Partikel, und optional Kohlenstoff und Silizium enthaltende Partikel und optional Partikel mindestens einer allotropen Kohlenstoffmodifikation, wobei die Silizium-Partikel, insbesondere die Silizium-Anode, einen Gehalt an Eisen von größer gleich 0,02 mg/kg, insbesondere größer gleich 0,01 mg/kg aufweist. Das Silizium der Anoden kann einen Gehalt an Eisen, Kalium, Zink, Aluminium, Kohlenstoff, Calcium, optional Titan, optional Sauerstoff, optional Kupfer von jeweils größer gleich 0,01 mg/kg aufweisen. Das Silizium der Anoden kann amorph, mono- oder polykristallin vorliegen.

Die erfindungsgemäßen Silizium-Anodenplatten können vorzugsweise eine Dichte von 0,1 g/cm³ bis 2,3 g/cm³ aufweisen. Silizium-Anodenplatten oder generell Anodenplatten sind vorzugsweise ausgewählt aus Polyeder, Kugel, Halbkugel, Kegel, insbesondere ausgewählt aus Prisma, Zylinder, Quader und Würfel.

Dabei ist es weiter besonders bevorzugt, wenn die Anode, insbesondere das Anodenmaterial, insbesondere im geladenen Zustand der Primärzelle, kein Lithium umfasst, vorzugsweise keine Lithium-Ionen, im Konzentrationsbereich von größer gleich 10000 Gew-ppm, größer gleich 1000 Gew.-ppm aufweist. Besonders bevorzugt weist das Anodenmaterial kleiner 100 Gew.-ppm Lithium-Atome auf. Vorzugsweise weist das Anodenmaterial kleiner 10²¹ Lithium-Atome/cm³ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt.

Vorzugsweise weist das Anodenmaterial kleiner 10²¹ Lithium-Atome/cm³ Silizium-Partikel auf. Des Weiteren ist es bevorzugt, wenn im Elektrolyten die Konzentration an Lithium, insbesondere Lithium-Ionen, kleiner gleich 10000 Gew.-ppm, insbesondere kleiner gleich 1000 Gew.-ppm, bevorzugt kleiner gleich 100 Gew.-ppm beträgt. Zudem ist es bevorzugt, wenn die Kathode, insbesondere das Kathodenmaterial unter 1000 Gew.-ppm Lithium enthält. Ferner ist es bevorzugt, wenn die Primärzelle umfassend Anode und Kathode sowie optional Elektrolyt, einen Gesamtgehalt an Lithium, insbesondere Lithium-Ionen, von kleiner gleich 10000 Gew.-ppm, bevorzugt kleiner 5000 Gew.-ppm, besonders bevorzugt kleiner 2000 Gew.-ppm enthält.

Gegenstand der Erfindung ist auch eine Anode, insbesondere umfassend einen Anodenstapel an einer Anodenhalterung und optional umfassend mindestens ein Gehäuseteil der Anode. Bevorzugt umfasst eine erfindungsgemäße Anode einen Anodenstapel von Anodenplatten, wobei die Anodenplatten jeweils parallel voneinander beabstandet vorliegen. Vorzugsweise sind die jeweils benachbarten Anodenplatten an ihren Vorder- und Rückseiten jeweils, im Wesentlichen parallel und/oder regelmäßig, voneinander beabstandet zu einem Anodenstapel angeordnet. Die Distanz zwischen den Vorder- und Rückseiten benachbarter Anodenplatten kann im Bereich von 1 mm bis 5 cm betragen, bevorzugt von 1 mm bis 10 mm. Des Weiteren ist es bevorzugt, wenn die flächigen Anoden, insbesondere Anodenplatten im Wesentlichen eine planare Vorder- und Rückseite aufweisen.

Entsprechend einer bevorzugten Ausführungsvariante umfasst das Silizium der Anode oder des Anodenmaterials, insbesondere die Silizium-Partikel, bevorzugt die kristallinen, polykristallinen oder amorphen Silizium-Partikel, des Anodenmaterials Dotierstoffe, wobei die Dotierstoffe ausgewählt sind aus Elementen der 13. Hauptgruppe, insbesondere umfassend Bor, Indium, Aluminium und/oder Gallium, und aus Elementen der 15. Hauptgruppe, insbesondere umfassend Phosphor, Arsen und/oder Antimon sowie Elemente der Eisengruppe, besonders bevorzugt sind Bor, Aluminium, Phosphor und/oder Eisen. Die Elemente der 13. Hauptgruppe (neue Nomenklatur: Gruppe 13 des Periodensystems) sind Elektronen-Akzeptoren neuer Nomenklatur. Als ElektronenDonatoren werden Elemente der 15. Hauptgruppe (neue Nomenklatur: Gruppe 15 des Periodensystems) eingesetzt. Nach einer Ausführungsform umfasst das Silizium, insbesondere die Silizium-Partikel des Anodenmaterials, Dotierstoffe, wobei die Dotierstoffe zu größer gleich 1 Element der 15. Hauptgruppe auf 10⁶ Silizium-Atome und/oder größer gleich 1 Element der 13. Hauptgruppe auf 10⁶ Silizium-Atome vorliegen, insbesondere größer gleich 1 Element der 15. Hauptgruppe auf 10⁴ Silizium-Atome und/oder größer gleich 1 Element der 13. Hauptgruppe auf 10⁴ Silizium-Atome, bestimmt mittels dem Fachmann bekannter ICP-MS Analyse (Inductive Plasma Discharge-Massenspektroskopie, welche unter Wikipedia ausführlich beschrieben ist: https://de.wikipedia.org/wiki/Massenspektrometrie_mit_induktiv_gekoppeltem_Plasma). Alternativ kann die Analyse auch durch GD-MS erfolgen (GDMS/GD-MS-Glimmentladungs-Massenspektroskopie mit Secondary Electron Multiplier- (SEM) und/oder Faraday-Detector gemäß Quelle:https://assets.thermofisher.com/TFS-Assets/CMD/brochures/BR-30066-GD-MS-ELEMENT-GD-PLUS-BR30066-EN.pdf). Den Farady-Detektor vorzugsweise für die Messungen von Spuren-Konzentrationen im %-Bereich.

Nach einer alternativen, bevorzugten Ausführungsform umfasst das Silizium, insbesondere die amorphen Silizium-Partikel, des Anodenmaterials Dotierstoffe, wobei die Dotierstoffe größer gleich 10² Atome (ca. 100 Gew.-ppm, abhängig von Atomgewicht des Dotierstoffes) der 15. Hauptgruppe auf 10⁶ Silizium-Atome und/oder größer gleich 10² Atome der 13. Hauptgruppe auf 10⁶ Silizium-Atome vorliegen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 2*10² Atome der 15. Hauptgruppe auf 10⁶ Silizium-Atome größer gleich 2*10² Atome der 13. Hauptgruppe auf 10⁶ Silizium-Atome vorliegen. Die vorstehenden Gehalte an Dotierstoffen im Silizium des Anodenmaterials können inhomogen im Silizium verteilt sein, sowie die Gehalte integral über die Gesamtmenge des Siliziums im Anodenmaterial im Mittel vorliegen. Zur Bestimmung obiger Gehalte wird eine Prüfmenge von 1 g Prüfmenge mittels GD-MS oder ICPMS vermessen, wobei zwischen beiden Methoden gewisse Abweichungen bestimmt werden können, vorzugsweise wird ein Mittelwert bestimmt. Entsprechend weiteren bevorzugten, alternativen Ausführungsformen umfasst das Silizium, insbesondere die amorphen Silizium-Partikel, des Anodenmaterials Dotierstoffe, wobei die Dotierstoffe kleiner gleich 10⁵ Atome der 15. Hauptgruppe auf 10⁶ Silizium-Atome und/oder kleiner gleich 10⁵ Atome der 13. Hauptgruppe auf 10⁶ Silizium-Atome betragen.

Nach weiteren bevorzugten, alternativen Ausführungsformen umfasst das Silizium, insbesondere die amorphen Silizium-Partikel, des Anodenmaterials Dotierstoffe, wobei die Dotierstoffe größer gleich 10³ Atome der 15. Hauptgruppe auf 10⁶ Silizium-Atome und/oder größer gleich 10³ Atome der 13. Hauptgruppe auf 10⁶ Silizium-Atome umfassen.

Die Silizium-Partikel können auf atomarer Ebene eine Legierung von Silizium mit mindestens einem Element der 13. oder 15 Hauptgruppe aufweisen, wobei das mindestens eine Element der 13. oder 15. Hauptgruppe ganz besonders bevorzugt mit größer gleich 10²⁰ Atomen/cm³ vorliegt und ausgewählt aus mindestens einem Elektronendonator und Elektronenakzeptor ist. Dabei liegt die Legierung von Silizium auf atomarer Ebene mit mindestens einem Element der 13. oder 15. Hauptgruppe als eine amorphe oder kristalline Phase vor. Besonders bevorzugt weisen die Silizium-Partikel einen Gehalt an Bor von 10 ppm-Gew bis 2,5 Gew.-% in Bezug auf den Gesamtgehalt von 100 Gew.-% des Silizium-Partikels auf, bevorzugt ist ein Gehalt von 10 ppm-Gew bis 1,8, besonders bevorzugt von 1,8 Gew.-% plus/minus 0,2 Gew.-%. Analog kann die Siliziumfolie einen Gehalt an Bor von 10 ppm-Gew bis 1,8 Gew.-% in Bezug auf den Gesamtgehalt von 100 Gew.-% der Siliziumfolie aufweisen. Es wurde überraschend gefunden, dass die Legierungen von Silizium und Bor antikorrosiv wirken, so dass die Lebensdauer der Primärzelle verlängert wird. Ein besonders bevorzugtes Anodenmaterial kann Siridion^{®}-Black umfassen. Nach einer Alternative kann das Anodenmaterial umfassen Silizium enthaltende Partikel mit einem Gehalt an Kohlenstoff, insbesondere mit einem Gehalt von 1 bis kleiner 10 Gew.-% Kohlenstoff im Gesamtgehalt der Silizium-enthaltenden Partikel. Bevorzugte Anodenmaterialen können Gemische von Silizium Partikeln ohne Kohlenstoffgehalt und Silizium Partikel mit einem Kohlenstoffgehalt umfassen.

Gegenstand der Erfindung ist eine Silizium-Anode umfassend Silizium-Partikel, die einen Gehalt an Bor von 10 Gew.-ppm bis 1,8 Gew.-% und/oder einen Gehalt an Kohlenstoff von 100 Gew-ppm bis kleiner 10 Gew.-% Kohlenstoff aufweisen.

In der Primärzelle kann als Elektrolyt ein alkalischer, wässriger Elektrolyt, wie bspw. KOH, Polyalkylen, Alkalihydroxid, wie vorzugsweise 3 bis 4 mol/L KOH, 1 Gew.-% PEG 4000, in Wasser für die erfindungsgemäßen Silizium-Anoden gewählt werden.

Ebenfalls Gegenstand der Erfindung ist ein System zur Datenverarbeitung umfassend Mittel zur Ausführung des vorgenannten Verfahrens, insbesondere für den Betrieb einer mehrzelligen Batterie oder eines Batteriesystems. Sowie auch ein Computerprogramm-produkt, umfassend Befehle, die bei der Ausführung des Programms durch einen Computer diesen veranlasst, das erfindungsgemäße Verfahren für den Betrieb einer Batterie oder für den Betrieb eines Batteriesystems auszuführen. Ferner wird die Verwendung einer mehrzelligen Batterie oder eines Batteriesystems in einem elektrisch angetriebenen Fahrzeug, wie einem Personenkraftwagen, Lastkraftwagen, elektrischem Zweirad oder anderen denkbaren mobilen Fahrzeugen oder mobilen Vorrichtungen, wie Anhänger, als auch Schienenfahrzeugen, mit einem elektrisch angetriebenen Motor und optional mit einer ersten wieder aufladbaren Batterie in einem solchen Fahrzeug beansprucht.

Die Erfindung wird anhand der nachfolgenden Figuren näher erläutert, ohne die Erfindung auf die konkreten Ausführungsformen zu beschränken.

Es stellen dar:
- **Figur 1**: Explosionszeichnung einer erfindungsgemäßen Primärzelle **0**
- **Figur 2**: Schnittzeichnung - Seitenansicht Primärzelle **0** Draufsicht Anodenstapel **2** und seitliche Kathodengehäuse **5.3** und **5.4**
- **Figur 3**: Anode **A** mit Anodenstapel **2** sowie Anodenhalterung **14**
- **Figur 4**: Kathode **B** mit Kathodengehäuse **5.3/5.4** und Hohlraum **21**
- **Figur 5**: Separator **S** umfassend Rahmen **6.5** für Membran **6.3** und Membranhalterung **64.**
- **Figur 6 bis 16**: stellen das dar Batteriesystem

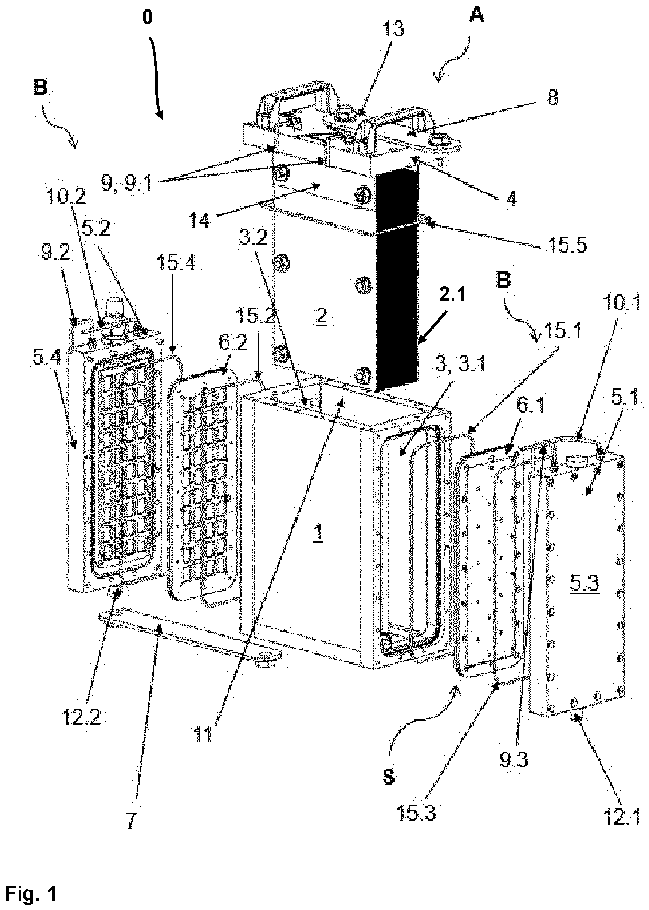

**Figur 1** zeigt eine erfindungsgemäße Primärzelle **0** als Explosionszeichnung sowie eine erfindungsgemäße Anode **A.** Die Anode **A** umfasst eine Anordnung von Komponenten, die die Anode bilden. So wird die Anode gebildet von einem Anodenstapel **2** von Anodenplatten **2.1,** der mittels einer Anodenhalterung **14** am Anodengehäuse **1** angeordnet wird. Der Anodenstapel **2** wird in eine Anodenöffnung **11** im Anodengehäuse **1** eingebracht. Die Anodenöffnung befindet sich auf der Oberseite des quaderförmigen Anodengehäuses. Des Weiteren weist das Anodengehäuse **1** zwei Kathodenöffnungen **3, 3.1** und **3.2** auf, die an Seitenflächen des Anodengehäuses **1** vorgesehen sind. Auf den Kathodenöffnungen **3.1** und **3.2** wird der Separator **S** und darauf das jeweilige Kathodengehäuse **5.3** und **5.4** angebracht. Sind Anode **A** und Kathoden **B** am Anodengehäuse **1** wie vorgesehen angeordnet, wird im Anodengehäuse ein Hohlraum zur Aufnahme von Elektrolyt ausgebildet.

Die einzelnen Baugruppen umfassend die Anode **A** und die Kathoden **B** werden nachfolgend detaillierter beschrieben.

Die Anode **A** umfasst einen Anodenstapel **2,** der mit der Anodenhalterung **14** am Gehäuseteil **4** der Anode **A** elektrisch leitend befestigt ist. Um den Gehäuseteil **4** fluiddicht auf Anodenöffnung **11** anbringen zu können wird eine Dichtung **15 (15.5),** insbesondere ein O-Ring, der Anode zur Abdichtung verwendet. Des Weiteren weist die Anode **A** einen Anodenanschluss **13** zur elektrisch leitenden Verbindung eines elektrischen Verbinder **8,** bspw. mit einer Stromschiene, der Primärzelle mit einer elektrischen Ableitung oder in einem Batteriestack auf. An der Anode sind zudem Schläuche **9, 9.1** für eine Belüftung - Zu-/Abluft -der Primärzelle vorgesehen. Insbesondere für eine Zu-/Ableitung von Inertgas (Argon und/oder N₂).

Die jeweilige Kathode **B** umfasst ein Kathodengehäuse **5.3/5.4** in den auf der dem Anodengehäuse zugewandten Seite jeweils eine Kathodenöffnung im Kathodengehäuse **5.4** vorgesehen ist. In die jeweilige Öffnung des Kathodengehäuses wird je eine Kontaktplatte eingesetzt oder aufgesetzt, auf der jeweils eine Dichtung **15.3,** insbesondere O-Ring, der Kathode rechts, und eine Dichtung **15.4,** insbesondere O-Ring, der Kathode links angeordnet wird. Auf diese Dichtungen werden die jeweiligen Membranen **6.1/6.2** mit Rahmen (Separator S) und darauf wiederum Dichtungen **15.1/15.2** angeordnet. Diese Zusammenstellung von Kathodengehäuse mit Separatoren **S** umfassend die Membranen **6.1/6.2** wird an den Kathodenöffnungen des Anodengehäuses **1** fluiddicht befestigt. Die Kathodengehäuse werden vorliegend gegenüberliegend an den seitlichen Seitenflächen des Anodengehäuses fluiddicht (äußeres Gehäuse) fixiert.

Eine Kathode **B** umfasst somit eine Baugruppe einer kompletten Kathode **5.1/5.2** mit jeweils einem Kathodengehäuse **5.3/5.4** einer Kontaktplatte und Schläuchen für die Zuluft **9.2/9.3,** Schläuchen für die Abluft **10.1/10.2** der Luftkathode als auch die elektrischen Kontakte **12.1/12.2** elektrischen Verbinder **7** bspw. als Stromschiene.

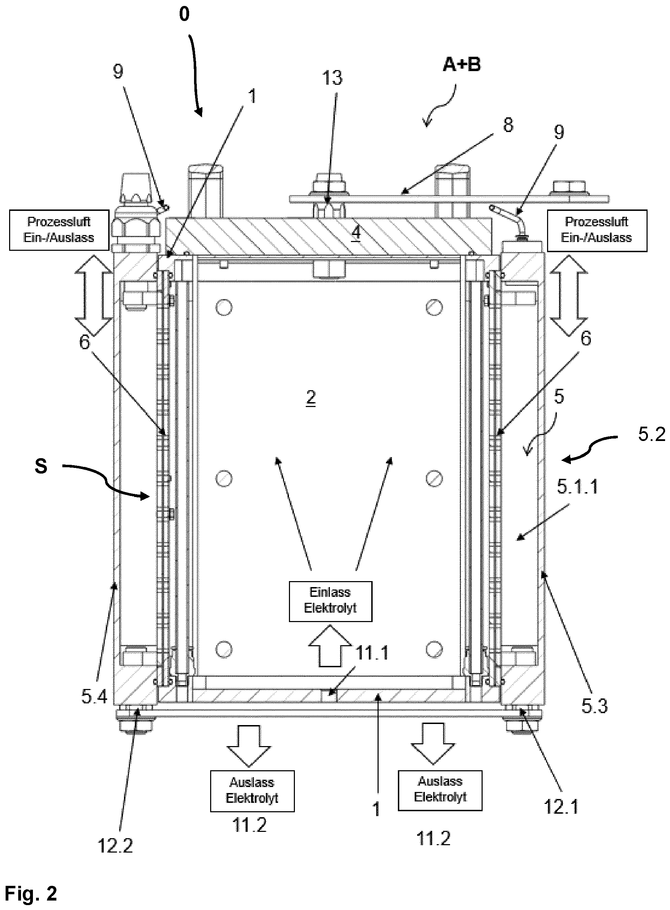

**Figur 2** stellt dar eine Schnittzeichnung der Seitenansicht einer Primärzelle **0** mit eingebauter Anode und zwei Luft-Kathoden **A+B** mit einer Draufsicht auf den Anodenstapel **2** und die seitlich am Anodengehäuse **1** angeordneten Kathoden **B,** insbesondere Luftkathoden **5,** seitliche Kathodengehäuse **5.3** und **5.4.** Die Membran mit Rahmen 6 als Separator **S** ist zwischen den beiden Kathodengehäusen und dem Anodengehäuse dargestellt. In dem jeweiligen Kathodengehäuse **5.2/5.3** ist ein Hohlraum zur Aufnahme von Kathodenmaterial **5.1.1** vorgesehen. Oben an der Luftkathode **5** sind Schläuche **9** zur Versorgung der Luftkathode mit einem Sauerstoff enthaltendem Gas angebracht, die bis in die Kathodengehäuse hinein einen Gaszutritt ermöglichen. Im Anodengehäuse **1** sind am Boden, gegenüber der Anodenöffnung je mindestens ein Elektrolyteinlass **11.1** und Elektrolytauslass **11.2** vorgesehen, über die ein Austausch des im Anodenraum einzubringenden Elektrolyten während des Betriebes der Primärzelle möglich ist. Des Weiteren sind an den Kathodengehäusen **5.3/5.4** je ein Kathodenanschluss **12.1/12.2** (unten) und oben an der Anode **A** ein Anodenanschluss **13** mit elektrischem Verbinder **8 -** hier Stromschiene - vorgesehen.

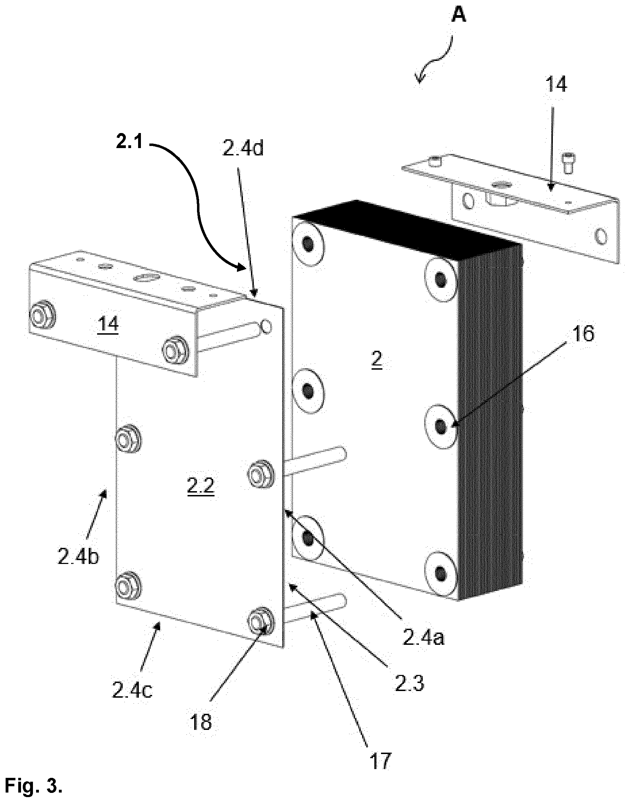

**Figur 3** zeigt eine Anode **A** mit Anodenstapel **2** sowie Anodenhalterung **14.** Erfindungsgemäß soll der Anodenstapel **2,** der einen Stapel Anodenplatten **2,** hier bevorzugt Silizium-Anodenplatten **2.1** zeigt, der mittels Fixierelementen **17/18** und zwischen den Anodenplatten angeordneten Abstandselementen **16** zu einem Anodenstapel angeordnet wird. Eine Anodenplatte **2.1** weist eine Vorderseite **2.2** eine Rückseite **2.3** und die die Vorder- und Rückseite verbindenden Seitenflächen **2.4a/2.4b/2.4c/2.4d** auf. Mit der Seitenfläche **2.4d** ist die Anodenplatte an der Innenseite der Anodenhalterung **14** fixiert und tritt mit dieser elektrisch leitend in Kontakt. Die Herstellung der elektrischen Kontaktierung kann zudem über an der Seitenfläche und der Innenseite der Anodenhalterung **14** stoffschlüssig mit diesen in Kontakt tretendem Lot, bspw. Weich- oder Hartlot erfolgen.

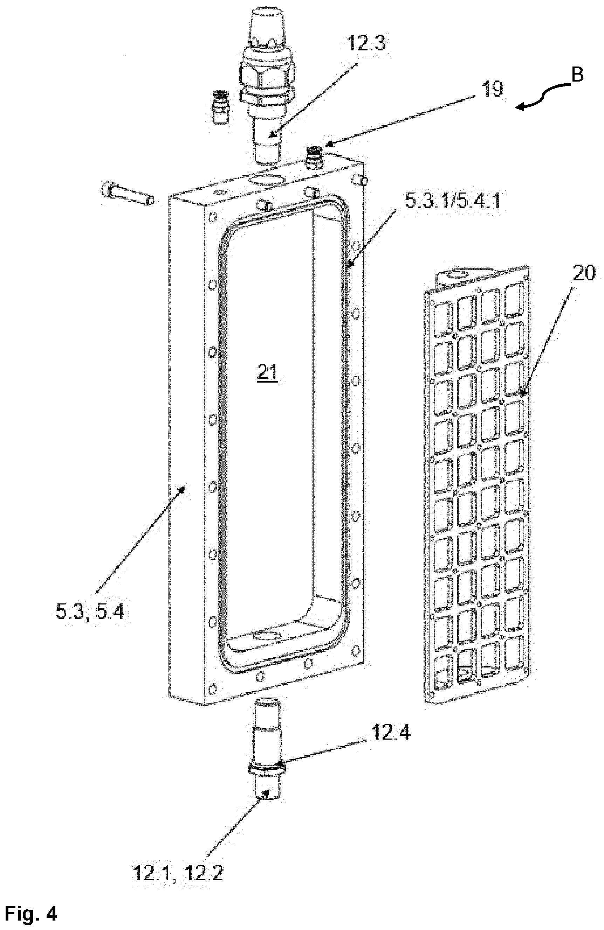

**Figur 4** Kathode **B** mit Kathodengehäuse **5.3/5.4** und Hohlraum **21** zur Aufnahme des Kathodenmaterials. Das Kathodengehäuse **5.3/5.4** weist eine Öffnung **19** zum Zuführen und Ableiten von Gasen, vorzugsweise Sauerstoff-enthaltenden Gasen, wie Luft auf. An der Öffnung kann eine Gasleitung, wie ein Schlauch oder Rohr angebracht werden. Sowohl oben als auch unten ist im Kathodengehäuse **5.3/5.4** eine Öffnung vorgesehen in die ein Kathodenanschluss unten **12.1/12.2** und ein Kathodenanschluss oben **12.3** in das Kathodenmaterial zur elektrischen Leitung eingebracht ist. Die Kathodenanschlüsse weisen je eine Dichtung **12.4,** insbesondere einen O-Ring, auf. Auf die Kathodenöffnungen **5.3.1/5.4.1** der jeweiligen Kathodengehäuse **5.3/5.4** wird jeweils eine Kontaktplatte **20** aufgebracht. Die Kontaktplatte kann vorzugsweise mittels eines Kathodenanschlusses am Gehäuse befestigt werden.

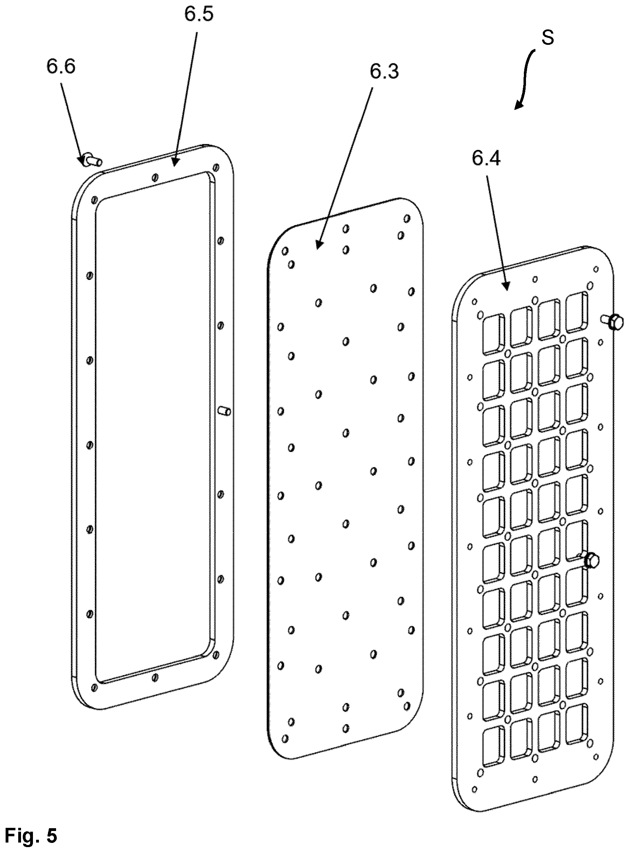

**Figur 5** stellt einen Separator **S** dar, der umfasst einen Rahmen **6.5** um eine Membran **6.3** und an einer Membranhalterung **6.4** mittels Befestigungsmittel **6.6,** hier bspw. Senkschrauben mit Innensechskant kann der Rahmen die Membran an der Membranhalterung fixieren. Alle vorgenannten Dichtungen können Silikondichtungen oder textile Dichtschnüre umfassen.

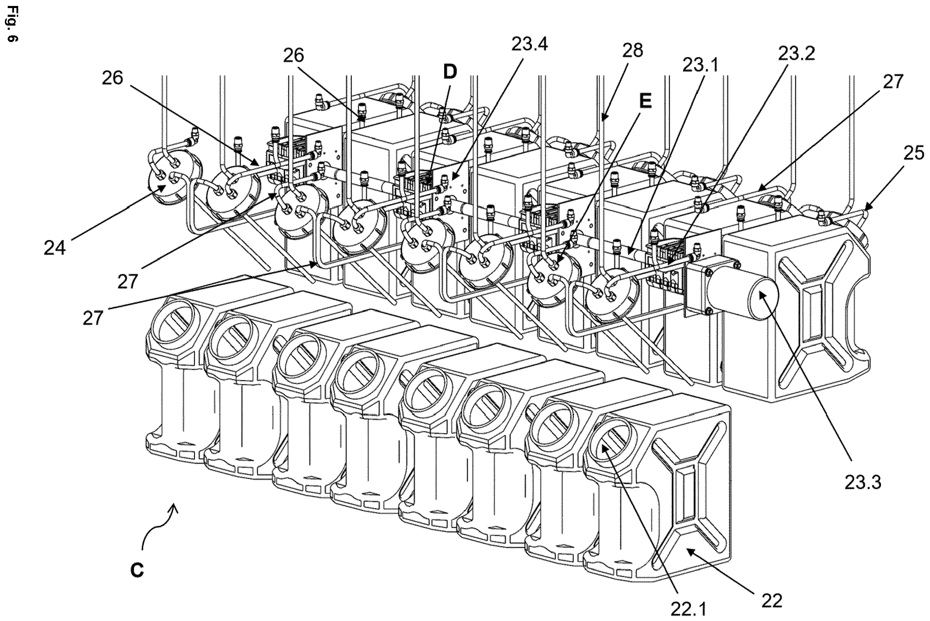

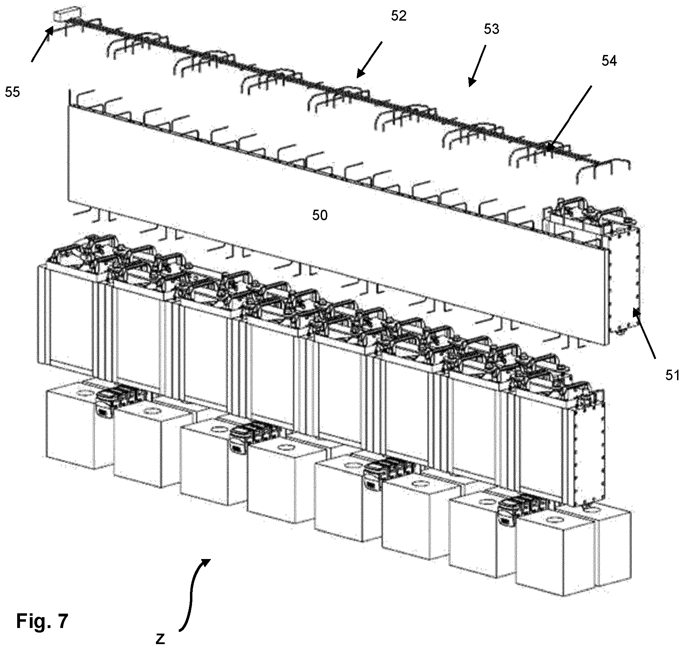

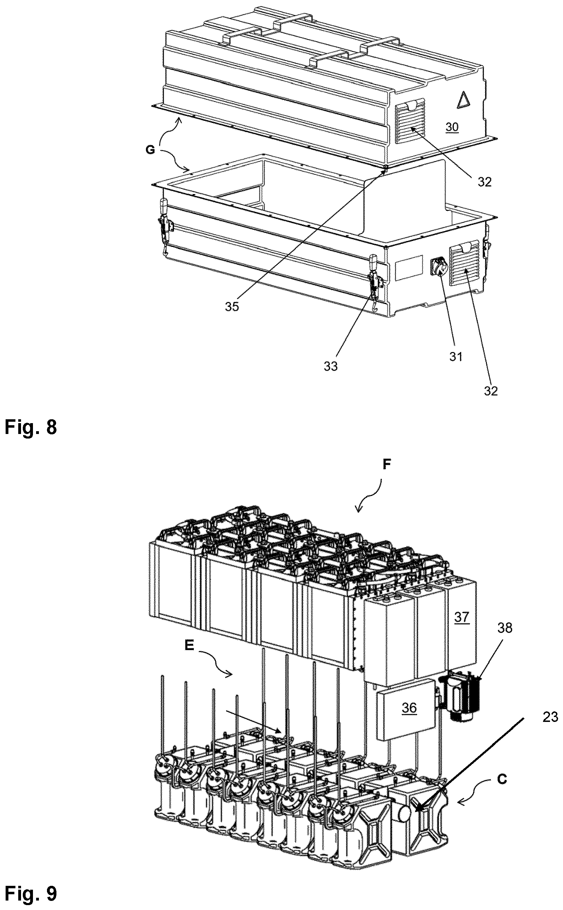

**Figur 6** zeigt einen Ausschnitt eines erfindungsgemäßen Batteriesystem mit mehrzelliger Batterie von elektrischen Primärzellen. Der Ausschnitt stellt dar eine Anordnung von Reservoiren **C** mit Fluidsystem **E,** das über eine Vielzahl an Pumpen **D** für ein Elektrolytmanagement der jeweiligen Primärzellen geeignet ist. So können die nicht in Figur **7** dargestellten Hohlräume im Anodengehäuse über das Fluidsystem mit Elektrolyten versorgt werden als auch der Elektrolyt aus diesen abgelassen werden. Die Reservoire **22** weisen eine Öffnung **22.1** auf, die mit einem Verschluss **24** versehen ist. In dem Verschluss **24** sind Zuführleitungen **26** Elektrolyteinlass **11.1,** Zuführleitungen **25** zur Pumpe und Rücklaufleitung **27** für den Rücklauf des Elektrolyten aus der Primärzelle angeordnet. Die Fördereinheiten **23** umfassen Pumpen **D (23),** die vorliegend zu Vierer-Gruppen von Pumpen **23** (Fig. 9) auf einer gemeinsamen Antriebsstange **23.1** als Schlauchpumpen-Modul umfassend rotierende Scheiben **23.2** zusammengefasst sind. Terminal der Antriebsstange weisen die Pumpen **D** einen gemeinsamen elektrischen Antriebsmotor **23.3** für die Antriebsstange **23.1** auf. Die Pumpen **23** und die Antriebsstange **23.1** werden mittels Halterungen **23.4** im Batteriemodul positioniert. Gleichfalls dargestellt ist eine Leitung, die als Abluft **28** für je ein Reservoir dient. Ein Reservoir kann beispielsweise 5 Liter umfassen.

In **Figuren 7** ist eine mehrzellige Batterie **Z** mit Anoden **A** mit Luftkathoden **B** in einer Zusammenstellung als mehrzellige Batterie **Z** als Explosionszeichnung dargestellt. Die in der Mitte sichtbare Platte **50** ist eine kompakte Infrastrukturanordnung mit Leitungen und Anschlüssen für den Betrieb des Batteriesystems. Elektrische Verbinder **54** verbinden entweder die Kathoden oder die Anoden von benachbarten Primärzellen miteinander. Oberhalb ist ein Luftverteilersystem für die Abluft **53** sowie ein Luftverteiler-System für die Zuluft dargestellt. Am Lufteinlass und optional am Luftauslass des jeweiligen Luftverteiler-Systems **53/52** ist ein Filter, insbesondere Luftfilter **55,** angeordnet.

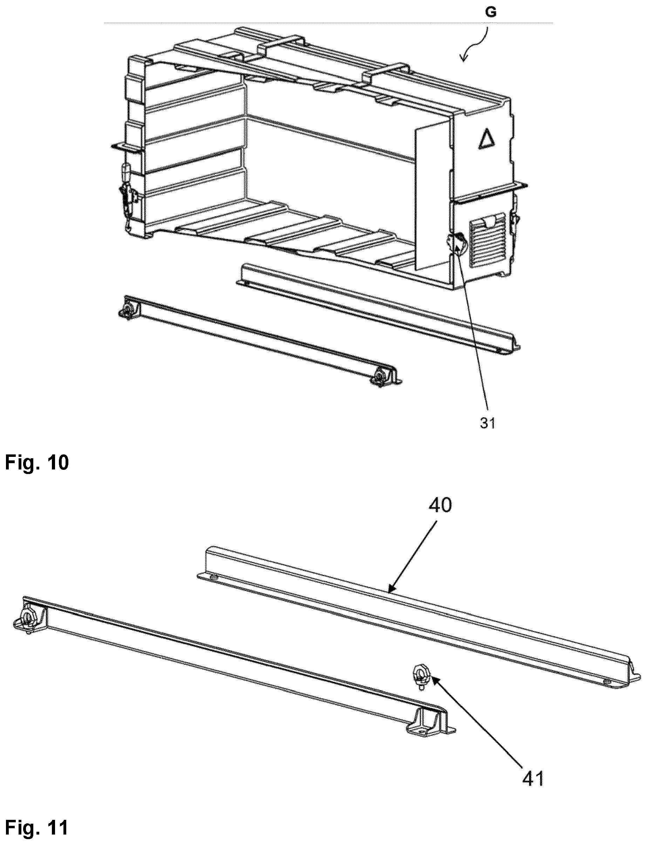

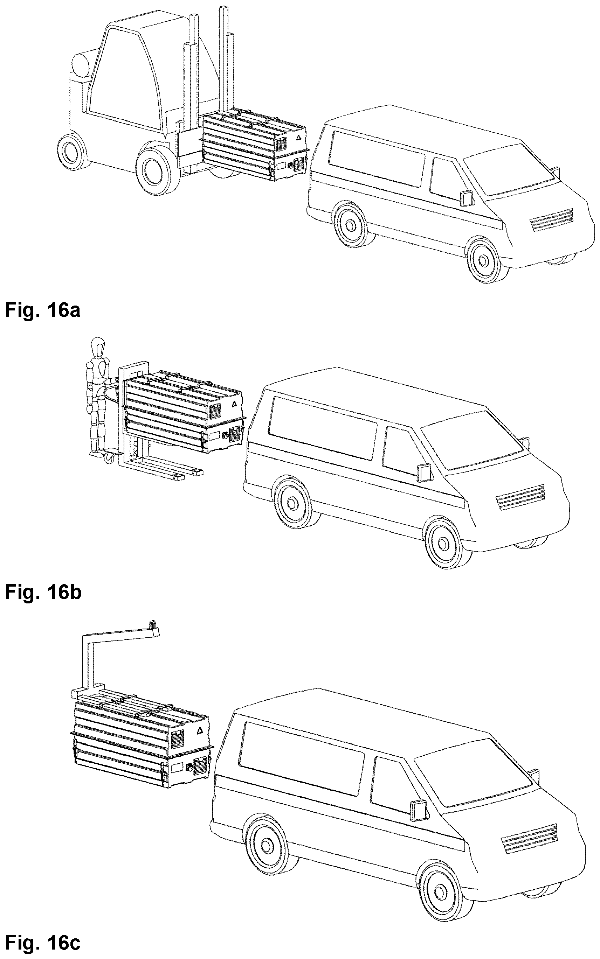

**Figuren 8, 9****,** **10** und **11** stellen dar, eine Gehäuseanordnung **G** mit Lufteinlass/-auslass **32** in der Gehäuseanordnung **G** mit einem elektrischen Anschluss für die Primärbatterieanordnung **31** dargestellt. Die Gehäuseanaordnung **G** umfassend mindestens zwei Gehäuseteile **30** kann mittels Verschlussspannern **33** an Fixiermitteln, wie Winkelhalterungen, in einem Fahrzeug fixiert werden. Die Gehäuseanordnung kann mit Befestigungsmitteln **35** an den Gehäuseteilen **30** aneinander befestigt werden. Um die elektrischen Komponenten des Batteriesystems von der mehrzelligen Batterie **Z** in einem Fahrzeug elektrisch anzuschließen, ist ein elektrischer Anschluss **31** für eine mehrzellige Batterie im Batteriesystem vorgesehen. Die Gehäuseanordnung kann zweiteilig sein und einen umlaufenden Rand mit Fixiermitteln, wie Befestigungsmitteln **25** aufweisen. In **Figur 9** ist dargestellt, ein Fluidsystem für das Elektrolytmanagement **E** sowie ein Fluidsystem Elektrolyt für das Management des Batteriesystems, als auch eine Anordnung Primärzellen **F** sowie auch eine Anordnung von Reservoiren **C** sowie Pumpen **23.** Im Abschnitt, in dem die elektronische Regelung vorgesehen ist, wie der Umrichter / Wechselrichter **37** mit einem Steuergerät **36.** Ein Verdichter **38** dient dazu wie eine Vakuumpumpe Luft oder Gase aus der jeweiligen Luft-Kathode ab- bzw. hindurch zu ziehen. In **Figur 11** ist eine Winkelhalterung **40** mit Befestigungsmittel **41** dargestellt, auf der ein Batteriesystem entlanggeschoben und optional fixiert werden kann. **Figuren 16a, 16b** und **16c** stellen eine Situation dar, in der ein Batteriesystem in einen Wagen eingeladen oder ausgeladen wird. Das Batteriesystem wird in diesem Fall mittels eines Hubwagens in oder aus dem Fahrzeug geladen.

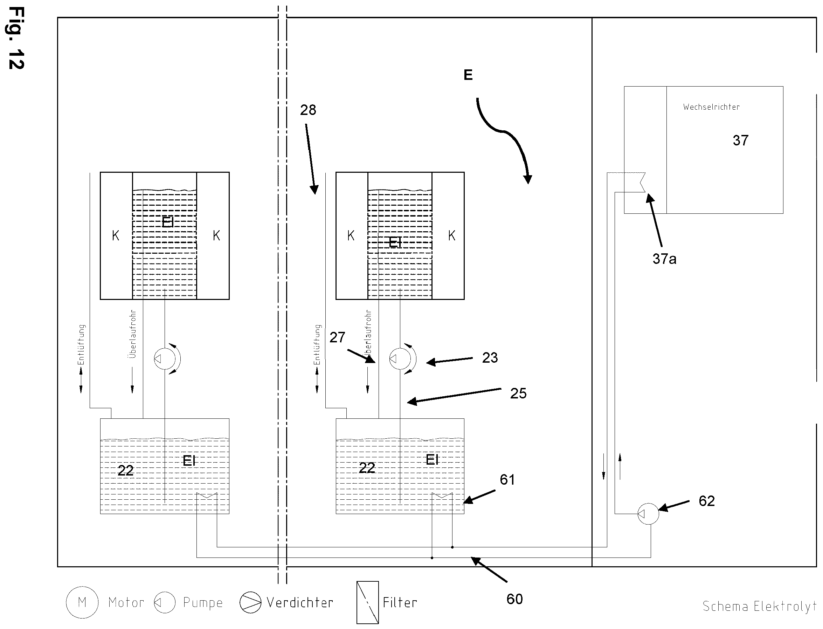

**Figur 12** zeigt schematisch das Fluidsystem **E** für das Elektrolytmanagement (C+D+E Elektrolyt-Managementsystem) des Elektrolyten **(EI).** Der Elektrolyt (**EI**) liegt in der Darstellung im Hohlraum des Anodengehäuses mit seitlich angeordneten Luft-Kathoden **K** vor sowie in einem darunter dargestellten Reservoir **22.** Mittels einer Zuführleitung **25** zur Pumpe **23** kann der Elektrolyt vom Reservoir in den Hohlraum des Anodengehäuses gepumpt werden und die Rücklaufleitung **27** zurückgeführt werden. Über eine Abluftleitung **28** erfolgt eine Entlüftung bzw. ein Druckausgleich im Elektrolytsystem. Im Reservoir **22** und im Wechselrichter **37** sind jeweils Wärmetauscher **61** und **37a** vorgesehen, über die die Abwärme des Wechselrichters für die Erwärmung des Elektrolyten **EI** genutzt werden kann. Mittels einer Pumpe in dem Wärmetauscher-System **62** kann das Medium im Leitungs-System **60** zur Wärmeübertragung von einem oder allen Reservoiren **22** zum Wärmetauscher **37a** des Wechselrichters geführt und abgeführt werden.

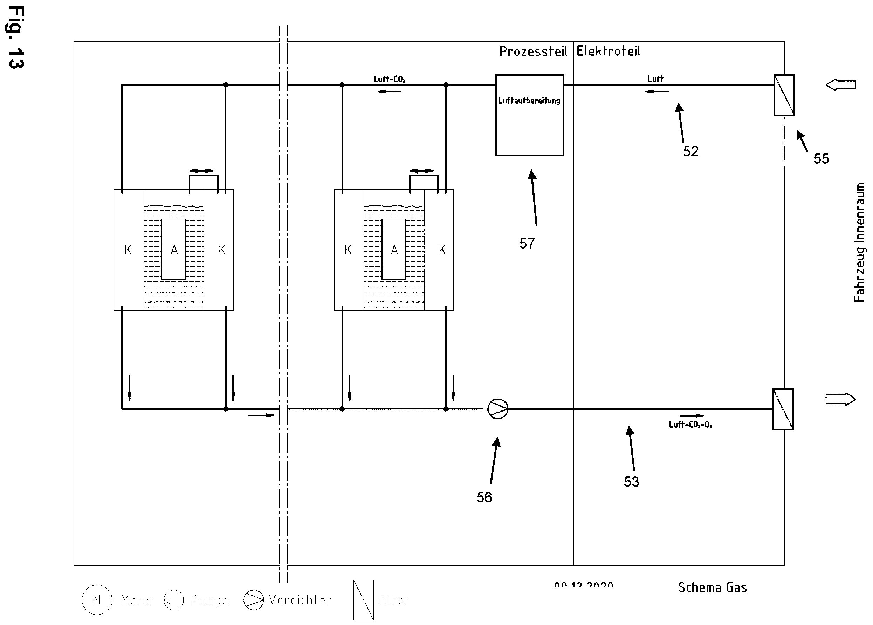

**Figur 13** ist eine schematische Darstellung des Luftverteilersystems **53** umfassend Gasleitungen, die zu und von den Luft-Kathoden **K** an den Anodengehäusen, umfassend die Anode **A,** führen. In Figur 13 ist das Luftverteilersystem **52** dargestellt. Die Luftansaugung durch den Filter **55** und durch die Luftkathoden **K** erfolgt mittels eines Verdichters **56.** Der Verdichter **56** oder auch eine Vakuumpumpe saugt die Luft hier von unterhalb der Luft-Kathoden an, so dass die Luft durch die Luft-Kathoden durchgeführt wird. Hinter dem Filter **55** und vor den Luft-Kathoden **K** ist eine Luftausbereitung **57** vorgeschaltet.

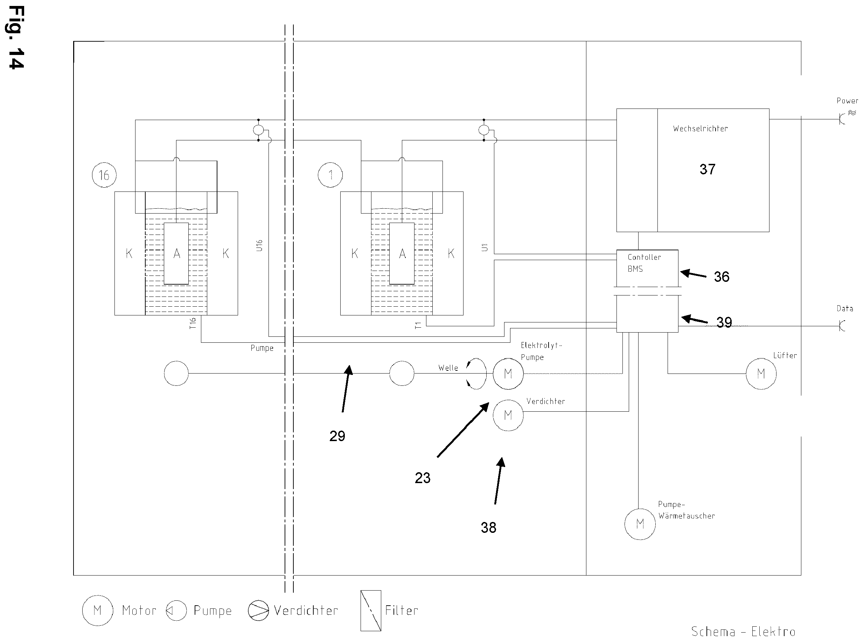

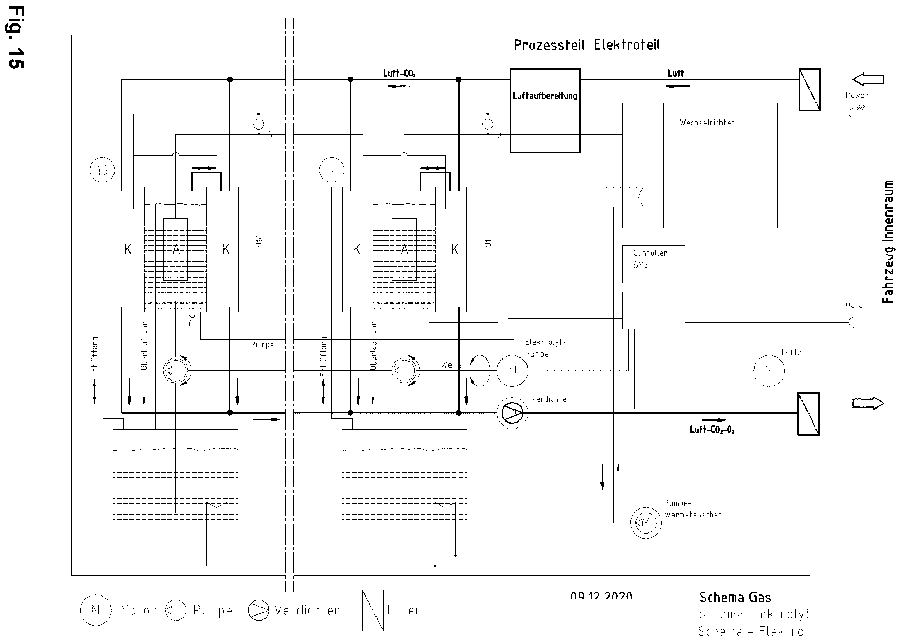

**Figur 14** stellt dar eine schematische Ansicht der elektronischen Komponenten und deren Verschaltung und elektrische Leitungen **29.** So sind die bei in **Figur 14** dargestellten Primärzellen in Reihe geschaltet und an einen Wechselrichter **37** angeschlossen, der die Gleichspannung in Wechselspannung wandelt. Alternativ kann zusätzlich ein Umrichter (AC/AC) vorgesehen sein. Eine Steuereinheit **39** kontrolliert die Temperaturmessung der Elektrolyttemperatur im Hohlraum des jeweiligen Anodengehäuses und regelt die Temperatursteuerung der jeweiligen Wärmetauscher als auch der zugehörigen Pumpe(n) oder ggf. zusätzlich vorhandenen Heizmittel um den Elektrolyten bei erhöhter Temperatur im Betrieb zu halten oder auch die Temperatur ggf. zu senken. Eine Steuereinheit **36** regelt die Stromentnahme aus den in Reihe und optional zusätzlich parallel geschalteten Primärzellen (weitere Primärzellen nicht dargestellt). Ferner kann die Steuereinheit derart ausgestaltet sein, dass sie das erfindungsgemäße Verfahren und die zugehörigen Komponenten steuert, insbesondere als ein computerimplementiertes Verfahren. Daher kann in der Steuereinheit ein Microcontroller vorgesehen sein, insbesondere ein Computer, der die Steuereinheit nach einem vorgegebenen Programm gemäß einem Verfahren der Erfindung steuert. **Figur 15** zeigt eine Überlagerung des Fluidsystems, Luftverteilersystems und der Verschaltung der elektronischen Komponenten.

### Bezugszeichen:

- **A**: Anode kpl.
- **B**: Kathode kpl.
- **C**: Anordnung von Reservoiren
- **D**: Pumpe(n) [1 Pumpenmodul kpl. - Elektrolyt Management]
- **E**: Fluidsystem Elektrolyt, Elektrolyt (EI)
- **C+D+E**: Elektrolyt-Managementsystem
- **F**: Anordnung Primärzellen
- **G**: Gehäuseanordnung
- **S**: Separator (umfasst Membran **6, 6.1,** Membranhalterung **6.4,** (Baugruppe **6** bis **6.6)**
- **H**: Hohlraum (Aufnahme Elektrolyt elektrische Primärzelle)
- **Z**: mehrzellige Batterie

- **1**: Gehäuse kpl. Anode
- **2**: Anodenstapel, Anodenanordnung in Form eines Stapels von Anodenplatten
- **2.1**: Anodenplatte
- **2.2**: Vorderseite Anodenplatte
- **2.3**: Rückseite Anodenplatte
- **2.4**: Seitenflächen die Vorder- und Rückseite verbinden (2.4a, 2.4b, 2.4c und/oder, 2.4d)
- **3**: Kathodenöffnung
- **3.1**: Kathodenöffnung
- **3.2**: Kathodenöffnung
- **4**: Gehäuseteil Anode
- **5**: Kathode, [Kathode kpl]. inkl. Gehäuse, Luftkathode
- **5.1**: Kathode kompl. inkl. Gehäuse
- **5.1.1**: Kathodenmaterial
- **5.2**: Kathode inkl. Gehäuse
- **5.3**: Kathodengehäuse, 5.3.1 Kathodenöffnung im Kathodengehäuse
- **5.4**: Kathodengehäuse, 5.4.1 Kathodenöffnung im Kathodengehäuse
- **6**: Membran mit Rahmen kpl.
- **6.1**: Membran mit Rahmen kpl.
- **6.2**: Membran mit Rahmen kpl.
- **6.3**: Membran
- **6.4**: Membranhalterung, insbesondere Platte mit Ausnehmung (Gitterplatte),
- **6.5**: zweiter Rahmen für Membran
- **6.6**: Befestigungsmittel
- **7**: elektrischer Verbindern Luft-Kathode
- **8**: elektrischer Verbinder Primärzellen
- **9**: Schlauch Zuluft
- **9.1**: Schlauch Zuluft
- **9.2**: Schlauch Zuluft
- **9.3**: Schlauch Zuluft
- **9.4**: Schlauch Zuluft
- **10**: Schlauch Abluft Kathode
- **10.1**: Schlauch Abluft Kathode
- **10.2**: Schlauch Abluft Kathode
- **11**: Anodenöffnung
- **11.1**: Elektrolyteinlass
- **11.2**: Elektrolytauslass
- **12**: Kathodenanschluss
- **12.1**: Kathodenanschluss unten (eine von zwei Kathoden)
- **12.2**: Kathodenanschluss unten (andere von zwei Kathoden)
- **12.3**: Kathodenanschluss oben
- **12.4**: Dichtung
- **13**: Anodenanschluss
- **14**: Anodenhalterung
- **15**: Dichtung, insbesondere O-Ring
- **15.1**: Dichtung, insbesondere O-Ring, der Kathode rechts
- **15.2**: Dichtung, insbesondere O-Ring, der Kathode links
- **15.3**: Dichtung, insbesondere O-Ring, der Kathode rechts
- **15.4**: Dichtung, insbesondere O-Ring, der Kathode links
- **15.5**: Dichtung, insbesondere O-Ring, der Anode
- **16**: Abstandselement
- **17**: erstes Fixierelement, insbesondere Bolzen
- **18**: zweites Fixierelement, insbesondere Sechskantmutter
- **19**: Öffnung Luft, Anschluss für Schlauch
- **20**: Kontaktplatte
- **21**: Hohlraum in Kathodengehäuse **5.3** bzw. **5.4**
- **22**: Reservoir
- **22.1**: Öffnung Reservoir
- **23**: Fördereinheit, insbesondere Pumpe
- **23.1**: Schlauchpumpen-Antriebsstange
- **23.2**: Schlauchpumpen-Modul umfassend rotierende Scheiben
- **23.3**: elektrischer Antriebsmotor für Antriebsstange
- **23.4**: Halterung Pumpe
- **24**: Verschluss für Reservoir
- **25**: Zuführleitung zur Pumpe
- **26**: Zuführleitung - Fig. 6 / Elektrolyteinlass **11.1**
- **27**: Rücklaufleitung / Elektrolytauslass **11.2** Rücklauf aus Primärzelle
- **28**: Abluft Reservoir Fig. 6
- **29**: elektrische Leitungen
- **30**: Gehäuse Batterie - Fig. 8
- **31**: elektrischer Anschluss für Primärbatterieanordnung
- **32**: Lufteinlass/-auslass
- **33**: Verschlussspanner
- **34**: Trennwand
- **35**: Befestigungsmittel
- **36**: Steuereinheit/ Steuergerät (Microcontroller, Messung Spannung, Regelung)
- **37**: Wechselrichter
- **37a**: Wärmetauscher Wechselrichter
- **38**: Gasfördereinheit, insbesondere Verdichter
- **39**: Steuereinheit/Steuergerät Temperatur-Steuerung/Regelung/Messung
- **40**: Winkelhalter im Fahrzeug
- **41**: Befestigungsmittel
- **50**: Infrastrukturanordnung
- **51**: Luftverteilungskanäle (Rohr, Schlauch)
- **52**: Lufterverteilersystem (Zuluft)
- **53**: Luftverteilersystem (Abluft)
- **54**: elektrische Verbinder
- **55**: Filter
- **56**: Verdichter (38
- **57**: Luftaufbereitung
- **60**: Leitungssystem Wärmetausche für Elektrolyt
- **61**: Wärmetauscher Reservoir / Heizmittel
- **62**: Pumpe Wärmetauscher

## Patentansprüche

1. Mehrzellige Batterie (Z) umfassend mindestens zwei elektrochemische Primärzellen, die jeweils umfassen mindestens eine Anode (A), mindestens eine Luft-Kathode (B) und mindestens einen Separator (S), wobei der Separator (S) Anode (A) von Luft-Kathode (B) separiert, **dadurch gekennzeichnet, dass**
mindestens eine Anode (A) in Form eines Anodenstapels (2) von Anodenplatten (2.1) vorliegt.

2. Mehrzellige Batterie nach Anspruch 1, **dadurch gekennzeichnet, dass**
i) mindestens zwei Primärzellen als Reihenschaltung vorliegen, wobei insbesondere 2 bis 300 Primärzellen in Serie geschaltet sind, und/oder
ii) mindestens zwei Primärzellen als Parallelschaltung vorliegen, wobei insbesondere 2 bis 300 Primärzellen parallel-geschaltet sind, und/oder
iii) mindestens drei Primärzellen als Gruppenschaltung vorliegen, umfassend
a) Primärzellen die als Reihenschaltung und/oder Gruppen von Primärzellen die als Reihenschaltung vorliegen, und
b) Primärzellen, die als Parallelschaltung und/oder Gruppen von Primärzellen, die als Parallelschaltung vorliegen.

3. Mehrzellige Batterie nach Anspruch 1 oder 2, **dadurch gekennzeichnet, dass** die Anodenplatten (2.1) als Anodenmaterial Silizium umfassen, insbesondere sind die Anodenplatten Silizium-Anodenplatten, wobei die Anodenplatten einen Gehalt an Silizium in der Silizium-Anodenplatten größer gleich 90 Gew.-% in Bezug auf die Gesamtzusammensetzung der Anodenplatten von 100 Gew.-% aufweisen.

4. Mehrzellige Batterie nach einem der Ansprüche 1 bis 3, **dadurch gekennzeichnet, dass** die Kontaktierung der jeweiligen Anoden (A) und Luft-Kathoden in einer Reihenschaltung, Parallelschaltung und/oder Gruppenschaltung mittels Stromleiter erfolgt, insbesondere a) mit einem maximalen Widerstand von kleiner 2 Milliohm/m, vorzugsweise kleiner gleich 1 Milliohm/m, besonders bevorzugt kleiner gleiche 0,5 Milliohm/m, und/oder b) mit Kupfer mit einem Querschnitt der Stromleiter von größer gleich 12,6 mm²,
mit Silber 11,34 mm² oder Aluminium 21,3 mm².

5. Mehrzellige Batterie nach einem der Ansprüche 1 bis 4, **dadurch gekennzeichnet, dass** jede elektrochemische Primärzelle ein Anodengehäuse aufweist, in dem mindestens eine Anode, mindestens eine Luft-Kathode, vorzugsweise mindestens zwei Luft-Kathoden, angeordnet sind, wobei das Anodengehäuse (1) einen Hohlraum (H) zur Aufnahme eines Elektrolyten aufweist, insbesondere wobei das Anodengehäuse (1) mindestens einen Elektrolyteinlass (11.1) und mindestens einen Elektrolytauslass (11.2) aufweist.

6. Mehrzellige Batterie nach einem der Ansprüche 1 bis 5, **dadurch gekennzeichnet, dass** die Primärzelle mindestens zwei Luft-Kathoden aufweist, insbesondere weist die Primärzelle mindestens zwei Luft-Kathoden umfassend eine physikalische Mischung von Manganoxid, Mangandioxid (MnO₂) und einem Leitfähigkeitsvermittler auf,
bevorzugt weisen die mindestens zwei Luft-Kathoden und mindestens eine Anode eine Anordnung auf in der die mindestens eine Anode zwischen den Luft-Kathoden und von dieser beabstandet angeordnet ist.

7. Batteriesystem umfassend eine mehrzellige Batterie nach einem der Ansprüche 1 bis 6, **dadurch gekennzeichnet, dass** das Batteriesystem umfasst mindestens einen ersten elektrischen Schaltkreis umfassend
i) mindestens einen Wechselrichter (37), insbesondere einen Wechselrichter, der in Kombination mit einem Wärmetauscher (37a) betrieben wird, und/oder
ii) mindestens eine Steuereinheit (39) zur Zustandsmessung von Fluiden, und/oder
iii) mindestens eine Steuereinheit (36) zur Steuerung des ersten Schaltkreises, wobei der Schaltkreis, insbesondere umfasst mindestens einen Wechselrichter sowie Primärzellen, und optional umfassend mindestens eine Steuereinheit (39) zur Zustandsmessung von Fluiden und/oder Steuerung der Fluide.

8. Batteriesystem nach Anspruch 7, **dadurch gekennzeichnet, dass** der Hohlraum (H) im Anodengehäuse (1) jeder Primärzelle über mindestens einen Elektrolyteinlass (11.1) und mindestens einen Elektrolytauslass (11.2) mit einem Reservoir (22), insbesondere einem Elektrolyt-Reservoir, kommuniziert.

9. Batteriesystem nach Anspruch 7 oder 8, **dadurch gekennzeichnet, dass** es mindestens eine Elektrolytfördereinheit aufweist.

10. Batteriesystem nach Anspruch 9, **dadurch gekennzeichnet, dass** die mindestens eine Elektrolytfördereinheit umfasst eine Pumpe, insbesondere eine Alkali-beständige Pumpe, Verdichter oder Umwälzeinheit, bevorzugt eine Membranpumpe, Strömungspumpe, Verdrängerpumpe, Strahlpumpe, Peristaltikpumpe, Schlauchpumpe, Kolbenpumpe, Kolbenmembranpumpe, Drehschieberpumpe, Exenterpumpe, Sumpfpumpe und/oder Vakuumpumpe aufweist.

11. Batteriesystem nach Anspruch 9 oder 10, **dadurch gekennzeichnet, dass** die Elektrolytfördereinheit umfasst eine Vielzahl von Pumpen (23), insbesondere Alkali-beständige Pumpen, bevorzugt Schlauchpumpen, die mittels einer zentralen Antriebseinheit betrieben wird, insbesondere umfassend einen zentralen Motor (23.3) und eine zentrale Antriebsstange (23.1).

12. Batteriesystem nach einem der Ansprüche 7 bis 11, **dadurch gekennzeichnet, dass** es mindestens eine Gasfördereinheit aufweist,
wobei die Gasfördereinheit umfasst einen Verdichter, insbesondere zum Komprimieren von Gasen, Pumpe, Umwälzeinheit, bevorzugt eine Membranpumpe, Strömungspumpe, Verdrängerpumpe, Strahlpumpe, Peristaltikpumpe, Schlauchpumpe, Kolbenpumpe, Kolbenmembranpumpe, Drehschieberpumpe, Exenterpumpe, Sumpfpumpe und/oder Vakuumpumpe.

13. Batteriesystem nach einem der Ansprüche 7 bis 12, **dadurch gekennzeichnet, dass** es mindestens eine Temperiereinheit (61) zur Einstellung der Temperatur des Elektrolyten aufweist.

14. Verfahren zum Betrieb einer mehrzelligen Batterie nach einem der Ansprüche 1 bis 6 oder eines Batteriesystems nach einem der Ansprüche 7 bis 13, indem die mehrzellige Batterie oder das Batteriesystem jeweils als Bestandteil eines ersten Schaltkreises umfassend einen Wechselrichter und als Bestandteil eines zweiten Schaltkreises, eines elektrisch angetriebenen Fahrzeugs mit einem elektrisch angetriebenen Motor und/oder mit einer ersten wiederaufladbaren Batterie vorliegt, und
der zweite Schaltkreis mindestens ein Messelement und mindestens ein Steuerelement aufweist, wobei das Messelement Zustandsdaten des elektrisch angetriebenen Motors und/oder der ersten wiederaufladbaren Batterie ermittelt,
- die Zustandsdaten werden an ein Steuerelement übermittelt,
- das Steuerelement klassifiziert die Zustandsdaten in mindestens zwei Klassen, und
- die mindestens zwei Klassen umfassen einen Normalbetrieb und einen Erweiterten-Betrieb, und
- wobei ein Steuerelement im Erweiterten-Betrieb die mehrzellige Batterie oder das Batteriesystem im ersten Schaltkreis des elektrisch angetriebenen Fahrzeuges schaltet, um elektrische Energie in den zweiten Schaltkreis einzuspeisen.

15. Verfahren nach Anspruch 14, **dadurch gekennzeichnet, dass** das Steuerelement die mehrzellige Batterie oder das Batteriesystem schaltet, sodass elektrische Energie in den zweiten Schaltkreis eingespeist wird, um i) den elektrisch angetriebenen Motor anzutreiben, oder ii) die Batterie oder das Batteriesystem der ersten wiederaufladbaren Batterie aufzuladen, und/oder
iii) um einem von i) und ii) abweichenden elektrischen Verbraucher elektrische Energie zuzuführen.

16. Verfahren nach Anspruch 14 oder 15, **dadurch gekennzeichnet, dass** ein Steuerelement
i) im Normalbetrieb einen Schaltvorgang auslöst, sodass der Elektrolyt im Hohlraum des Anodengehäuses einer bis jeder Primärzelle der mehrzelligen Batterie oder des Batteriesystems in das jeweilige Reservoir abgelassen wird, oder
ii) im Erweiterten-Betrieb einen Schaltvorgang auslöst, sodass der Elektrolyt aus dem jeweiligen Reservoir in den jeweiligen Hohlraum des Anodengehäuses einer bis jeder Primärzelle der mehrzelligen Batterie oder des Batteriesystems in das jeweilige Reservoir zugeführt wird und/oder der Elektrolyt im Reservoir temperiert wird.

17. Verfahren nach einem der Ansprüche 14 bis 16, **dadurch gekennzeichnet, dass** der Elektrolyt im Reservoir mittels eines Wärmetauschers im Wechselrichter temperiert wird.

18. Verfahren nach einem der Ansprüche 14 bis 17, **dadurch gekennzeichnet, dass** eine Ermittlung des Innenwiderstandes mindestens einer elektrochemischen Primärzelle oder einer Gruppe von Primärzellen in einer mehrzelligen Batterie oder im Batteriesystem erfolgt, mit den Schritten,
i. Messen einer Spannung einer Primärzelle oder einer Gruppe von in Reihe geschalteten Primärzellen zu einer ersten Zeit, zu der die Primärzelle oder die in Reihe geschaltete Gruppe von Primärzellen nicht zu einer elektronischen Last zugeschaltet ist (OCV) und Messung von Uo,
ii. Zuschalten einer elektronischen Last, welches zu einem Stromfluss I1 führt,
iii. Messung der Spannung U1,
iv. Berechnen des Kurzschlussstromes Ik aus diesen Größen und Berechnung des Ri aus Uo/Ik. Ik=(Uo)*IkI1/(Uo-UkI1), optional
v. dynamische und/oder kontinuierliche Wiederholung der Berechnung und optional Abschätzen der Restkapazität.

19. System zur Datenverarbeitung umfassend Mittel zur Ausführung des Verfahrens nach einem der Ansprüche 14 bis 18, insbesondere für den Betrieb einer mehrzelligen Batterie nach einem der Ansprüche 1 bis 6 oder eines Batteriesystems nach einem der Ansprüche 7 bis 13.

20. Computerprogrammprodukt, umfassend Befehle, die bei der Ausführung des Programms durch einen Computer diesen veranlasst, das Verfahren nach einem der Ansprüche 14 bis 18 für den Betrieb einer Batterie nach einem der Ansprüche 1 bis 6 oder für den Betrieb eines Batteriesystems nach einem der Ansprüche 7 bis 14 auszuführen.

21. Verwendung einer mehrzelligen Batterie oder eines Batteriesystems in einem elektrisch angetriebenen Fahrzeug mit einem elektrisch angetriebenen Motor und optional mit einer ersten wieder aufladbaren Batterie in einem solchen Fahrzeug.
